# EUROPÄISCHE PATENTSCHRIFT

(11) **EP 3 485 192 B1**
(45) Veröffentlichungstag und Bekanntmachung des Hinweises auf die Patenterteilung: **24.06.2020**
(21) Anmeldenummer: 17742409.0
(22) Anmeldetag: 12.07.2017
(51) Int. Cl.: F16L 29/00, B64G 1/10, B64G 1/40, B64G 1/64

(54) **VERSCHLUSSKUPPLUNG**
LOCKING COUPLING
ACCOUPLEMENT À VERROUILLAGE

(30) Priorität: 18.07.2016 DE 102016213094
(43) Veröffentlichungstag der Anmeldung: 22.05.2019
(73) Patentinhaber: Technische Universität Berlin, 10623 Berlin (DE)
(72) Erfinder: DORNBURG, Lars, 14612 Falkensee (DE)
(74) Vertreter: Maikowski & Ninnemann Patentanwälte Partnerschaft mbB
(86) Internationale Anmeldenummer: PCT/EP2017/067618
(87) Internationale Veröffentlichungsnummer: WO 2018/015256

(56) Entgegenhaltungen:
- EP-A2- 0 202 798
- FR-A- 1 377 215
- GB-A- 1 164 126

## Beschreibung

Die Erfindung betrifft eine Verschlusskupplung nach dem Oberbegriff des Anspruchs 1. Die Verschlusskupplung ist zur Herstellung einer fluidischen Verbindung zwischen zwei Komponenten vorgesehen, um ein Fluid (flüssiges oder gasförmiges Medium) zwischen den beiden Komponenten zu übertragen.

Aus den Dokumenten FR 1 377 215 A, EP 0 202 798 A2 und GB 1 164 126 A sind Verschlusskupplungen zur Herstellung einer fluidischen Verbindung zwischen zwei Komponenten für einen Fluidtransfer bekannt.

So kann die Verschlusskupplung beispielsweise bei der Treibstoffübertragung und Wiederbetankung von Satelliten Anwendung finden. Das Antriebssystem eines Satelliten kann dabei in ein Treibstofftankmodul, ein Treibstofftransfermodul und ein Antriebsmodul modularisiert sein. Zur Herstellung einer lösbaren Verbindung zwischen diesen Modulen kann eine Verschlusskupplung zum Einsatz kommen.

Dabei sollte die Verschlusskupplung die Module im entkoppelten Zustand jeweils verschließen und fluidisch abdichten und im gekoppelten Zustand eine leckagefreie Verbindung zwischen den Modulen zum richtungsunabhängigen Fluidtransfer ermöglichen.

Der vorliegenden Erfindung liegt die Aufgabe zugrunde, eine Verschlusskupplung zu schaffen, die diese Kriterien erfüllt.

Diese Aufgabe wird erfindungsgemäß durch eine Verschlusskupplung mit den Merkmalen des Anspruchs 1 gelöst. Ausgestaltungen der Erfindung sind in den Unteransprüchen angegeben.

Danach umfasst die Verschlusskupplung eine erste Kupplungseinheit und eine zweite Kupplungseinheit, die sich jeweils entlang einer Längsachse erstrecken. Zur Herstellung einer fluidischen Verbindung zwischen den beiden Kupplungseinheiten können diese beispielsweise derart hintereinander ausgerichtet werden, dass deren Längsachsen eine gemeinsame Achse bilden. Die erste Kupplungseinheit umfasst eine erste Ventileinheit und eine erste Verschlusseinheit, während die zweite Kupplungseinheit eine zweite Ventileinheit und eine zweite Verschlusseinheit umfasst. Die erste und die zweite Ventileinheit sind ausgebildet, um eine fluidische Verbindung zwischen der ersten und der zweiten Kupplungseinheit zu bilden. Die erste und die zweite Ventileinheit können demnach an fluidführende Einheiten der miteinander zu verbindenden Module angeschlossen werden/sein. Die erste und die zweite Verschlusseinheit sind ausgebildet, um die erste Kupplungseinheit und die zweite Kupplungseinheit mechanisch miteinander zu verbinden.

Die Verschlusskupplung zeichnet sich dadurch aus, dass die zweite Kupplungseinheit identisch zur ersten Kupplungseinheit ausgebildet ist und die erste Kupplungseinheit ein Betätigungselement umfasst, durch dessen Betätigung die erste und die zweite Kupplungseinheit über die erste und die zweite Verschlusseinheit mechanisch und über die erste und die zweite Ventileinheit fluidisch miteinander verbindbar sind. Dabei kann durch Betätigung des Betätigungselements zunächst die mechanische Verbindung und anschließend durch eine anhaltende Betätigung des Betätigungselements die fluidische Verbindung hergestellt werden. Dabei kann das Betätigungselement zur Herstellung der mechanischen und der fluidischen Verbindung in gleicher Weise betätigt werden.

Hierdurch wird erreicht, dass durch Betätigung eines einzelnen Elements sowohl eine mechanische als auch fluidische Verbindung zwischen den miteinander zu verbindenden Modulen hergestellt und wieder gelöst werden kann. Dadurch wird die Handhabung der Verschlusskupplung vereinfacht.

Die erste Verschlusseinheit umfasst eine Antriebshülse, die drehfest mit dem Betätigungselement verbunden ist, und eine Verschlusshülse, die drehfest mit der Antriebshülse verbunden ist. Damit kann eine Bewegung (Rotation) des Betätigungselements über die Antriebshülse auf die Verschlusshülse übertragen werden.

Da beide Kupplungseinheiten identisch (androgyn) ausgebildet sind, weist sowohl die erste als auch die zweite Kupplungseinheit das beschriebene Betätigungselement auf, so dass zur Herstellung der mechanischen und fluidischen Verbindung zwischen den beiden Kupplungseinheiten das Betätigungselement der ersten oder zweiten Kupplungseinheit gewählt werden kann. Die Kupplungseinheit, deren Betätigungselement betätigt wird, ist dann die aktive Kupplungseinheit, während die andere die passive Kupplungseinheit ist. Die beiden identischen Kupplungseinheiten sind also als androgyn zu betrachten. Eine androgyne Kupplungseinheit kann mit einer weiteren androgynen Kupplungseinheit, einer ausschließlich aktiven Kupplungseinheit oder einer ausschließlich passiven Kupplungseinheit zusammenwirken.

Bei einer androgynen (oder zumindest funktional identischen) Ausgestaltung der beiden Kupplungseinheiten kann durch die Bewegung der Fluidleitung der ersten (zweiten) Kupplungseinheit aus dem Gehäuse der ersten (zweiten) Verschlusseinheit heraus und in die zweite (erste) Kupplungseinheit hinein eine Kraft auf die Fluidleitung der zweiten (ersten) Kupplungseinheit ausgeübt werden. Dadurch kann sich die Fluidleitung der zweiten (ersten) Kupplungseinheit gegenüber dem Schieber der zweiten (ersten) Kupplungseinheit entlang der Längsachse verschieben, wodurch eine Rotation der Ventilkugel der zweiten (ersten) Kupplungseinheit bewirkt werden kann. Je nach Ausgangsstellung der Ventilkugeln der beiden Kupplungseinheiten im entkoppelten Zustand kann somit eine Fluidverbindung zwischen den Fluidleitungen der ersten und zweiten Kupplungseinheit hergestellt werden. Um die beiden Kupplungseinheiten wieder zu entkoppeln, kann das Betätigungselement der ersten (zweiten) Kupplungseinheit in entgegengesetzte Richtung betätigt werden.

Gemäß einer Ausführungsform kann die erste Ventileinheit innerhalb der ersten Verschlusseinheit angeordnet sein, wobei ein Teil der ersten Ventileinheit entlang der Längsachse relativ zu einem Teil der ersten Verschlusseinheit verschiebbar sein kann. Dadurch kann ein Teil der ersten Ventileinheit zwecks Herstellung der fluidischen Verbindung aus der ersten Verschlusseinheit heraus und auf die zweite Ventileinheit zu bewegt werden.

So kann das Betätigungselement Teil der ersten Verschlusseinheit und um die Längsachse drehbar gelagert sein. Das Betätigungselement kann beispielsweise durch Rotation betätigt werden. Dabei kann eine Rotation des Betätigungselements in eine Richtung zur Herstellung der mechanischen und der fluidischen Verbindung führen und eine Rotation in die entgegengesetzte Richtung zum Lösen der mechanischen und der fluidischen Verbindung. Das Betätigungselement kann dabei derart mit zumindest einem Teil der ersten Verschlusseinheit zusammenwirken, dass sich dieser Teil durch Betätigung des Betätigungselements (beispielsweise entlang der Längsachse) bewegt, wodurch eine mechanische Verbindung mit der zweiten Verschlusseinheit hergestellt werden kann. Ferner kann das Betätigungselement derart mit der Ventileinheit (beziehungsweise Teilen davon) zusammenwirken, dass eine Fluidverbindung zwischen der ersten und der zweiten Kupplungseinheit hergestellt werden kann.

Das Betätigungselement und die Verschlusshülse können jeweils als Nabe ausgebildet sein, die auf die Antriebshülse, die eine Welle bildet, geschoben sind. Zur Herstellung einer drehfesten Verbindung zwischen dem Betätigungselement und der Antriebshülse einerseits und zwischen der Antriebshülse und der Verschlusshülse andererseits kann die Antriebshülse ein um die Längsachse nicht rotationssymmetrisches Profil der Außenoberfläche aufweisen. Das Betätigungselement und die Verschlusshülse können entsprechend ein komplementäres Profil der Innenoberflächen aufweisen. Bei diesem Profil kann es sich beispielsweise um ein Polygonprofil (mit oder ohne abgerundete Ecken), ein P4C Profil, ein Keilwellenprofil oder ein Evolventenzahnprofil handeln.

Die erste Verschlusseinheit kann ferner ein (hülsenförmiges) Gehäuse aufweisen. Das Gehäuse kann auf der Antriebshülse drehbar gelagert sein. Damit ist das Betätigungselement (und die Verschlusshülse), das (die) drehfest mit der Antriebshülse verbunden ist (sind), bezüglich des Gehäuses drehbar. Die Antriebshülse kann als Welle ausgebildet sein, während das Betätigungselement, die Verschlusshülse und das Gehäuse jeweils als Nabe ausgebildet und auf der Welle gelagert sind. Dabei können die einzelnen Elemente der ersten Verschlusseinheit von innen nach außen betrachtet in folgender Reihenfolge angeordnet sein: Antriebshülse, Verschlusshülse, Gehäuse und Betätigungselement.

Das (hülsenförmige) Gehäuse kann auf seiner Innenoberfläche ein Gewinde aufweisen, und die Verschlusshülse kann auf ihrer Außenoberfläche ein Gewinde aufweisen. Dabei können das Gewinde des Gehäuses und das Gewinde der Verschlusshülse komplementär ausgebildet sein, und insbesondere ineinander geschraubt sein. Durch die Verschraubung können das Gewinde des Gehäuses und das Gewinde der Verschlusshülse derart zusammenwirken, dass eine Drehbewegung des Betätigungselements nicht nur in einer Drehbewegung, sondern auch in einer Translationsbewegung der Verschlusshülse entlang der Längsachse resultiert. Damit kann durch Betätigung (Rotation) des Betätigungselements die Verschlusshülse bezüglich des Gehäuses linear entlang der Längsachse verschoben werden. Damit kann beispielsweise erreicht werden, dass die Verschlusshülse aus dem Gehäuse der ersten Verschlusseinheit herausbewegt wird und somit zwecks Herstellung einer mechanischen Verbindung zwischen der ersten Kupplungseinheit und der zweiten Kupplungseinheit mit der zweiten Kupplungseinheit, insbesondere mit der zweiten Verschlusseinheit, zusammenwirken kann.

Gemäß einer Ausführungsform kann die erste Ventileinheit eine Fluidleitung mit einer Aufnahme für eine Ventilkugel umfassen. Die Fluidleitung kann röhrenförmig ausgebildet sein. Die Fluidleitung kann einen Innendurchmesser aufweisen der kleiner oder gleich dem Durchmesser der Ventilkugel ist. Die Aufnahme kann einen Hohlraum aufweisen, der die Form der Ventilkugel (einer Kugel oder eines Kugelsegments) hat. Dabei kann die Ventilkugel in der Aufnahme drehbar sein. Ferner kann die erste Ventileinheit einen Schieber umfassen, wobei der Schieber relativ zu der Fluidleitung entlang der Längsachse verschiebbar ist. Dabei kann der Schieber (eine Nabe bildend) auf die Fluidleitung (eine Welle bildend) aufgeschoben sein. Der Schieber kann beispielsweise im Wesentlichen hülsenförmig ausgebildet sein.

Der Schieber kann mindestens einen Arm aufweisen, der sich im Wesentlichen entlang der Längsachse erstreckt und in die Aufnahme für die Ventilkugel hineinragt. Der mindestens eine Arm und die Ventilkugel können derart zusammenwirken, dass eine Bewegung des Schiebers relativ zu der Fluidleitung entlang der Längsachse eine Rotation der Ventilkugel in der Aufnahme bewirkt. Die Rotation kann dabei um eine Achse erfolgen, die im Wesentlichen senkrecht zu der Längsachse ist. Hierfür kann eine Verbindung zwischen dem mindestens einen Arm und der Ventilkugel vorgesehen sein, bei der ein Vorsprung (beispielsweise in Form eines Stiftes) in eine Ausnehmung ragt. Die Ausnehmung kann länglich, insbesondere geradlinig, ausgebildet sein. Der Vorsprung kann an dem mindestens einen Arm vorgesehen sein, und die (längliche) Ausnehmung kann in der Oberfläche der Ventilkugel ausgebildet sein, und vice versa. Alternativ kann ein separates Element (beispielsweise in Form eines Stiftes) in die Ausnehmung einerseits und in eine dem Stift komplementär geformte Ausnehmung anderseits greifen. Die dem Stift komplementär geformte Ausnehmung kann an dem mindestens einen Arm vorgesehen sein, und die (längliche) Ausnehmung kann in der Oberfläche der Ventilkugel ausgebildet sein, und vice versa. Die Oberfläche der Ventilkugel kann zur Ausbildung einer Verbindung zwischen der Ventilkugel und dem entlang der Längsachse bewegbaren mindestens einen Arm abgeflacht sein und abschnittsweise eine ebene Oberfläche aufweisen. Die ebene Oberfläche kann sich parallel zu der Längsachse erstrecken, so dass der mindestens eine Arm entlang der ebenen Oberfläche gleiten kann. Die längliche Ausnehmung oder der Stift können in/an der ebenen Oberfläche angeordnet sein. Der Stift kann auf einer Achse angeordnet sein, die sich senkrecht zu der Längsachse erstreckt und die von einer zentralen Achse der Ventilkugel, die durch den Mittelpunkt der Ventilkugel verläuft, beabstandet ist. Die längliche Ausnehmung kann in einer Ebene angeordnet sein, die sich parallel zu der Längsachse erstreckt, wobei die längliche Ausnehmung jedoch einen Winkel mit der Längsachse einschließt. Damit kann erreicht werden, dass durch eine Linearbewegung des Stifts entlang der Längsachse die Ventilkugel um eine zentrale Achse rotiert, die durch den Mittelpunkt der Ventilkugel und senkrecht zu der Längsachse verläuft.

Gemäß einer Ausführungsform kann die Ventilkugel eine Durchgangsöffnung aufweisen, die beispielsweise als ein im Wesentlichen zylinderförmiger Kanal ausgebildet ist. Dieser Kanal kann koaxial mit einer zentralen Achse der Ventilkugel, die durch den Mittelpunkt der Ventilkugel verläuft, ausgebildet sein. Dabei kann die Achse, um die die Ventilkugel drehbar ist, einen Winkel (beispielsweise im Wesentlichen 90°) mit der Achse der Durchgangsöffnung einschließen.

Die Durchgangsöffnung in der Ventilkugel der ersten Ventileinheit ist vorgesehen, um eine Fluidverbindung zwischen der Fluidleitung der ersten Ventileinheit und der zweiten Kupplungseinheit herzustellen. Dabei kann das Fluid von der ersten in die zweite Kupplungseinheit fließen, oder vice versa. Um die Fluidverbindung gezielt herstellen und unterbrechen zu können, kann die Ventilkugel in der Aufnahme zwischen einer ersten Position, in der die Fluidleitung durch die Durchgangsöffnung maximal freigegeben ist, und einer zweiten Position, in der die Fluidleitung durch die Ventilkugel vollständig verschlossen ist, bewegbar sein. Die Ausrichtung der Durchgangsöffnung unterscheidet sich in der ersten und in der zweiten Position. Während in der ersten Position die Durchgangsöffnung maximal von Fluid durchströmbar ist, ist die Durchgangsöffnung in der zweiten Position nicht von Fluid durchströmbar. Insbesondere kann die Durchgangsöffnung in der ersten Position (eine Verlängerung der Fluidleitung bildend) entlang der Längsachse ausgerichtet sein und in der zweiten Position einen Winkel (beispielsweise im Wesentlichen 90°) mit der Längsachse einschließen. Je nach Durchmesser der Durchgangsöffnung kann der Winkel in der zweiten Position auch kleiner als 90° sein.

Die Aufnahme für die Ventilkugel kann an jeder Stelle der Fluidleitung vorgesehen sein, an der die Ventilkugel die Fluidverbindung beeinflussen (herstellen oder unterbrechen) kann. So kann die Aufnahme die Fluidleitung in zwei Abschnitte unterteilen. Alternativ kann die Aufnahme an einem Ende der Fluidleitung vorgesehen sein, wobei das Ende beispielsweise jenes ist, welches der zweiten Kupplungseinheit zugewandt ist. Sofern die Aufnahme an einem Ende der Fluidleitung vorgesehen ist, kann eine Ventilkappe vorgesehen sein, die mit der Aufnahme derart zusammenwirkt, dass die Ventilkugel in der Aufnahme gehalten werden kann.

Gemäß einer Ausführungsform kann ein Mittel zur Übertragung der Translationsbewegung der Verschlusshülse auf den Schieber vorgesehen sein. Damit kann durch Betätigung des Betätigungselements nicht nur die Verschlusshülse verschoben und eine mechanische Verbindung zwischen der ersten und der zweiten Kupplungseinheit hergestellt werden, sondern auch der Schieber (der Teil der ersten Ventileinheit ist) bezüglich der Fluidleitung entlang der Längsachse verschoben werden. Durch die Verschiebung des Schiebers wird (wie bereits weiter oben erwähnt) die Ventilkugel in Rotation versetzt, was zur Herstellung einer Fluidverbindung führen kann.

Das Mittel zur Übertragung der Translationsbewegung der Verschlusshülse auf den Schieber kann an der Verschlusshülse und/oder an dem Schieber vorgesehen sein. So können beispielsweise die Verschlusshülse und der Schieber jeweils einen Vorsprung aufweisen, wobei sich die Vorsprünge in entgegengesetzte Richtungen und im Wesentlichen quer zu der Längsachse erstrecken. Durch Bewegung der Verschlusshülse entlang der Längsachse können die Vorsprünge zur Anlage gebracht werden. Die Vorsprünge können dabei derart zueinander angeordnet sein, dass sich der Vorsprung der Verschlusshülse durch Bewegung der Verschlusshülse entlang der Längsachse zunächst auf den Vorsprung des Schiebers zubewegen kann, wobei der Schieber nicht mitgenommen wird. Erst wenn die Vorsprünge zur Anlage gebracht worden sind, kann die Translationsbewegung der Verschlusshülse auf den Schieber übertragen werden. Somit kann erreicht werden, dass die Bewegung des Schiebers zeitlich verzögert gegenüber der Bewegung der Verschlusshülse einsetzt, so dass beispielsweise zunächst (mittels der sich entlang der Längsachse verschiebenden Verschlusshülse) eine mechanische Verbindung zwischen der ersten und der zweiten Kupplungseinheit hergestellt wird und anschließend auch eine fluidische Verbindung (mittels Rotation der Ventilkugel, die durch die Bewegung des Schiebers verursacht wird).

Gemäß einer weiteren Ausführungsform kann ein Mittel zur Übertragung der Translationsbewegung der Verschlusshülse auf die Fluidleitung vorgesehen sein, wobei das Mittel (beziehungsweise ein Teil des Mittels) an der Verschlusshülse und/oder an einem Element der Ventileinheit (an der Fluidleitung selbst oder an einem mit der Fluidleitung fest verbundenen anderen Element der Ventileinheit) vorgesehen ist. Dieses Mittel kann einen Vorsprung an der Verschlusshülse und einen Vorsprung an der Fluidleitung umfassen, wobei sich die Vorsprünge in entgegengesetzte Richtungen und im Wesentlichen quer zu der Längsachse erstrecken. Der Vorsprung der Fluidleitung kann beispielsweise durch die Aufnahme für die Ventilkugel gebildet werden. Alternativ zu dem Vorsprung der Fluidleitung kann ein Vorsprung durch die Ventilkappe gebildet werden, die fest mit der Fluidleitung verbunden ist. Das Mittel zur Übertragung der Translationsbewegung der Verschlusshülse auf die Fluidleitung kann ferner eine (Kompressions)Feder umfassen, die beispielsweise (entlang der Längsachse betrachtet) zwischen dem Vorsprung der Verschlusshülse und dem Vorsprung der Fluidleitung (beziehungsweise der Ventilkappe) angeordnet ist und entlang der Längsachse verformbar (komprimierbar) ist.

Der Vorsprung der Verschlusshülse, der Teil des Mittels zur Übertragung der Translationsbewegung der Verschlusshülse auf die Fluidleitung ist, kann identisch sein mit dem Vorsprung der Verschlusshülse, der Teil des Mittels zur Übertragung der Translationsbewegung der Verschlusshülse auf den Schieber ist. Alternativ kann die Verschlusshülse zwei Vorsprünge aufweisen, die entlang der Längsachse betrachtet beispielsweise hintereinander angeordnet sind.

Sofern die Verschlusshülse zwei Vorsprünge aufweist, kann die Feder direkt zwischen dem einen Vorsprung der Verschlusshülse und dem Vorsprung der Fluidleitung (beziehungsweise der Ventilkappe) angeordnet sein. Durch Bewegung der Verschlusshülse entlang der Längsachse in Richtung des Vorsprungs der Fluidleitung kann die Feder komprimiert werden, wodurch ein Teil der Kraft auf die Fluidleitung übertragen werden und sich die Fluidleitung ebenfalls entlang der Längsachse bewegen kann.

Sofern die Verschlusshülse einen einzelnen Vorsprung aufweist, der sowohl Teil des Mittels zur Übertragung der Translationsbewegung der Verschlusshülse auf die Fluidleitung als auch Teil des Mittels zur Übertragung der Translationsbewegung der Verschlusshülse auf den Schieber ist, kann die Feder zwischen dem Vorsprung des Schiebers und dem Vorsprung der Fluidleitung (beziehungsweise der Ventilkappe) angeordnet sein. Dabei kann der Vorsprung des Schiebers (entlang der Längsachse betrachtet) zwischen dem Vorsprung der Verschlusshülse und der Feder angeordnet sein. Sobald der Vorsprung der Verschlusshülse an dem Vorsprung des Schiebers anliegt, und sich der Schieber mit der Verschlusshülse entlang der Längsachse bewegt, kann der Vorsprung des Schiebers eine Kraft auf die Feder ausüben, die zu einer Kompression der Feder und zu einer Bewegung der Fluidleitung entlang der Längsachse führen kann.

Damit es tatsächlich zu einer Kompression der Feder kommt, ist ferner eine auf die Feder wirkende Gegenkraft erforderlich, die entgegen der Bewegungsrichtung (des Schiebers und) der Verschlusshülse gerichtet ist. Diese Gegenkraft kann beispielsweise von dem Vorsprung der Fluidleitung beziehungsweise der Ventilkappe auf die Feder ausgeübt werden. Die Gegenkraft kann beispielsweise von der zweiten Kupplungseinheit herrühren, die mit ihrer zweiten Ventileinheit während des Kupplungsvorgangs der beiden Kupplungseinheiten an der ersten Ventileinheit der ersten Kupplungseinheit anliegt. So kann beispielsweise die Ventilkappe der ersten Ventileinheit an einer Ventilkappe der zweiten Ventileinheit anliegen.

Die Fluidleitung kann demnach durch Betätigung des Betätigungselements entlang der Längsachse verschoben werden und zwar derart, dass sie beispielsweise aus dem Gehäuse der ersten Verschlusseinheit heraus- und in die zweite Kupplungseinheit hineinragt. Je nach Aufbau der zweiten Kupplungseinheit kann die Bewegung der Fluidleitung der ersten Kupplungseinheit für die Herstellung der fluidischen Verbindung zwischen der ersten und der zweiten Kupplungseinheit genutzt werden.

Bei einer nicht im Rahmen der Erfindung liegenden, unterschiedlichen Ausgestaltung der beiden Kupplungseinheiten kann die zweite Kupplungseinheit eine zweite Verschlusseinheit aufweisen, die ausgebildet ist, um mit der Verschlusshülse der ersten Verschlusseinheit zwecks Herstellung einer mechanischen Verbindung zwischen den beiden Kupplungseinheiten zusammenzuwirken. Ferner kann die zweite Kupplungseinheit eine zweite Ventileinheit aufweisen, die ausgebildet ist, um mit der ersten Ventileinheit der ersten Kupplungseinheit zwecks Herstellung einer fluidischen Verbindung zwischen den beiden Kupplungseinheiten zusammenzuwirken. Die übrigen Merkmale der zweiten Kupplungseinheit können sich von denen der ersten Kupplungseinheit unterscheiden. Eine unterschiedliche Ausgestaltung kann beispielsweise eine funktional unterschiedliche Ausgestaltung der Ventil- und/oder Verschlusseinheiten oder insbesondere eine "männliche" beziehungsweise "weibliche" Ausgestaltung der (ansonsten funktional identischen) Kupplungseinheiten sein.

Gemäß einer Ausführungsform ist das Betätigungselement manuell betätigbar. Dabei kann die Außenoberfläche der ersten Kupplungseinheit (beziehungsweise eines Teils des Betätigungselements und des Gehäuses) derart gestaltet sein, dass ein Abrutschen vermieden werden kann. Beispielsweise kann die Außenoberfläche ein Rändelprofil oder eine Gummierung aufweisen.

Gemäß einer alternativen Ausführungsform kann das Betätigungselement durch eine Antriebseinheit betätigbar sein. Die Antriebseinheit kann beispielsweise ein Schneckengetriebe umfassen. Alternativ kann die Antriebseinheit einen Hohlwellenmotor beziehungsweise Torquemotor umfassen, der (direkt) axial auf das Betätigungselement schiebbar sein kann. Anstelle eines Schneckengetriebes kann ein herkömmliches Stirnradgetriebe, Kegelradgetriebe oder Umlaufgetriebe (wobei das Betätigungselement das sogenannte Sonnenrad bildet) verwendet werden. Schließlich kann das Betätigungselement auch mittels eines Riementriebs als Antriebseinheit angetrieben werden.

Hierfür können Befestigungsmittel vorgesehen sein, um das Betätigungselement und das Gehäuse sicher mit der Antriebseinheit zu verbinden.

Gemäß einer Ausführungsform kann vorgesehen sein, dass im fluidisch gekoppelten Zustand der ersten und der zweiten Kupplungseinheit die erste Ventileinheit an der zweiten Ventileinheit anliegt. Hierfür können die erste und die zweite Ventileinheit jeweils ein freies Ende aufweisen, das beispielsweise von einer Stirnfläche begrenzt wird, die sich im Wesentlichen senkrecht zu der Längsachse erstreckt. Dabei können die Stirnflächen flächig aneinander anliegen. Die Stirnflächen können jeweils eine Öffnung aufweisen, wobei die Öffnungen der beiden Stirnflächen im gekoppelten Zustand auf einer Achse liegen, um eine fluidische Verbindung zwischen den beiden Kupplungseinheiten zu ermöglichen. Insbesondere kann die erste Ventileinheit (beziehungsweise die Ventileinheit der aktiven Kupplungseinheit bei androgynen Kupplungseinheiten) entlang der Längsachse eine (in Richtung der zweiten Ventileinheit gerichtete) Kraft auf die zweite Ventileinheit (beziehungsweise die Ventileinheit der passiven Kupplungseinheit) ausüben.

Zur Abdichtung des Übergangs zwischen den Ventileinheiten im gekoppelten Zustand der Kupplungseinheiten kann vorgesehen sein, dass die Verschlusshülse der ersten Verschlusseinheit (beziehungsweise der Verschlusseinheit der aktiven Kupplungseinheit bei androgynen Kupplungseinheiten) die erste und die zweite Ventileinheit zumindest im Bereich des Übergangs zwischen den Ventileinheiten umschließt und auf ihrer den Ventileinheiten zugewandten Innenseite Dichtmittel aufweist, die im gekoppelten Zustand einerseits zwischen der Verschlusshülse und der ersten Ventileinheit und andererseits zwischen der Verschlusshülse und der zweiten Ventileinheit angeordnet sind.

Ferner kann mindestens ein Dichtmittel vorgesehen sein, das zwischen der Ventilkugel und der Aufnahme angeordnet ist. Dieses mindestens eine Dichtmittel kann zur Abdichtung der Fluidleitung gegenüber der Umgebung dienen, wenn die Kupplungseinheiten entkoppelt sind und die Ventilkugel in der zweiten Position ist. Dazu kann die Aufnahme eine entsprechende Nut aufweisen, in der das mindestens eine Dichtmittel angeordnet ist. Dabei kann das mindestens eine Dichtmittel derart angeordnet sein, dass es nicht in Kontakt mit der Durchgangsöffnung ist, wenn die Ventilkugel in der zweiten Position ist. Das mindestens eine Dichtmittel kann beispielsweise ringförmig ausgebildet sein.

Sofern die Ventilkugel mittels einer Ventilkappe in der Aufnahme gehalten wird, kann mindestens ein Dichtmittel vorgesehen sein, das zwischen der Ventilkugel und der Ventilkappe (beispielsweise in einer in der Ventilkappe vorgesehenen Nut) angeordnet ist. In diesem Fall können mindestens ein Dichtmittel zwischen der Ventilkugel und der Aufnahme und mindestens ein Dichtmittel zwischen der Ventilkugel und der Ventilkappe angeordnet sein. Wenn die Kupplungseinheiten gekoppelt sind und die Ventilkugeln in der ersten Position sind, können somit die Durchgangsöffnungen der Ventilkugeln gegenüber der Umgebung abgedichtet werden.

Gemäß einer Ausführungsform kann im fluidisch gekoppelten Zustand der ersten und der zweiten Kupplungseinheit die Ventileinheit der aktiven Kupplungseinheit (beispielsweise die erste Ventileinheit) entlang der Längsachse in die passive Kupplungseinheit (beispielsweise die zweite Kupplungseinheit) hineinragen.

Die Erfindung wird nachfolgend anhand von Ausführungsbeispielen in Verbindung mit den Zeichnungen näher erläutert werden.

Es zeigen:
- Fig. 1: einen Querschnitt durch eine Verschlusskupplung im nicht gekoppelten Zustand mit einer ersten Kupplungseinheit und einer zweiten Kupplungseinheit gemäß einer Ausführungsform der Erfindung;
- Fig. 2: eine Schnittdarstellung einer Verschlusseinheit der ersten Kupplungseinheit aus Figur 1;
- Fig. 3: eine Explosionsdarstellung der Verschlusseinheitskomponenten Betätigungselement, Antriebshülse und Verschlusshülse der Verschlusseinheit aus Figur 2;
- Fig. 4: eine perspektivische Darstellung einer Ventileinheit (ohne Ventilkappe) der ersten Kupplungseinheit aus Figur 1;
- Fig. 5: eine Explosionsdarstellung der Ventileinheit aus Figur 4 zusätzlich mit Ventilkappe;
- Fig. 6: eine perspektivische Darstellung der Ventileinheitskomponenten Schieber und Ventilkugel aus den Figuren 4 und 5, wobei die Kugel in einer zweiten Position angeordnet ist;
- Fig. 7: eine perspektivische Darstellung der Ventileinheitskomponenten Schieber und Ventilkugel aus den Figuren 4 und 5, wobei die Kugel in einer ersten Position angeordnet ist;
- Fig. 8a-8e: fünf Momentaufnahmen der Verschlusskupplung aus Figur 1 zur Veranschaulichung des Kupplungsvorgangs;
- Fig. 9: einen Querschnitt durch eine erste Kupplungseinheit gemäß einer weiteren Ausführungsform der Erfindung;
- Fig. 10: einen Querschnitt durch eine erste Kupplungseinheit nicht gemäß der Erfindung; und
- Fig. 11: einen Querschnitt durch eine erste Kupplungseinheit nicht gemäß der Erfindung.

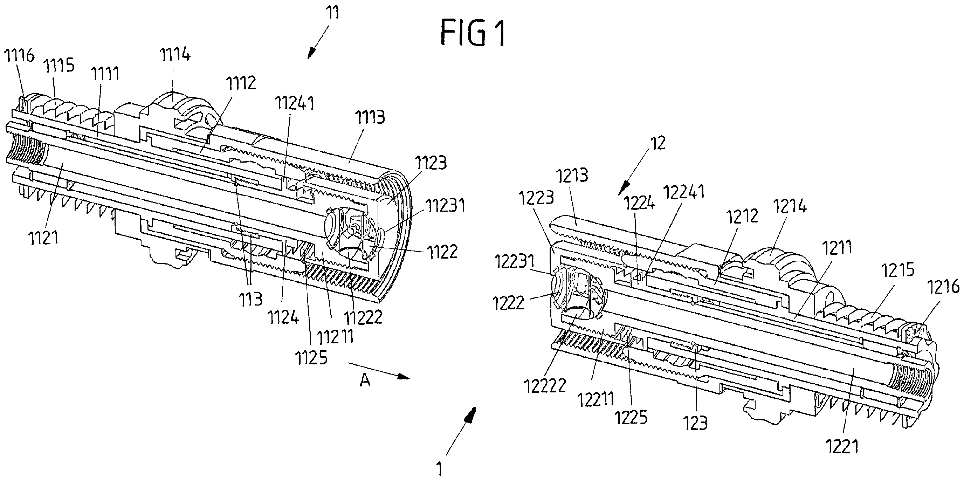

In Figur 1 ist schematisch ein Querschnitt entlang einer Längsachse A durch eine Verschlusskupplung 1 gemäß einer Ausführungsform der Erfindung im entkoppelten Zustand dargestellt. Die Verschlusskupplung 1 umfasst zwei miteinander kuppelbare Einheiten, die erste Kupplungseinheit 11 und die zweite Kupplungseinheit 12. In der Ausführungsform der Figur 1 sind die erste und die zweite Kupplungseinheit 11, 12 identisch (Form, Funktionsweise) aufgebaut. Dabei sind die beiden Kupplungseinheiten 11, 12 spiegelbildlich zueinander angeordnet, wobei die Spiegelebene im Wesentlichen senkrecht zu der Längsachse A ausgerichtet ist. Trotz identischem Aufbau der beiden Kupplungseinheiten fungiert die eine Kupplungseinheit als aktive, die andere Kupplungseinheit als passive Kupplungseinheit, wie später erläutert werden wird. Die beiden Kupplungseinheiten 11, 12 aus Figur 1 sind somit als androgyn zu betrachten.

Die erste Kupplungseinheit 11 umfasst eine erste Verschlusseinheit 111 und eine erste Ventileinheit 112, und die zweite Kupplungseinheit 12 umfasst eine zweite Verschlusseinheit 121 und eine zweite Ventileinheit 122. Dabei sind die erste Verschlusseinheit 111 und die zweite Verschlusseinheit 121 identisch aufgebaut, ebenso die erste Ventileinheit 112 und die zweite Ventileinheit 122. Im entkoppelten Zustand ist die erste Ventileinheit 112 in der ersten Verschlusseinheit 111 und die zweite Ventileinheit 122 in der zweiten Verschlusseinheit 121 angeordnet.

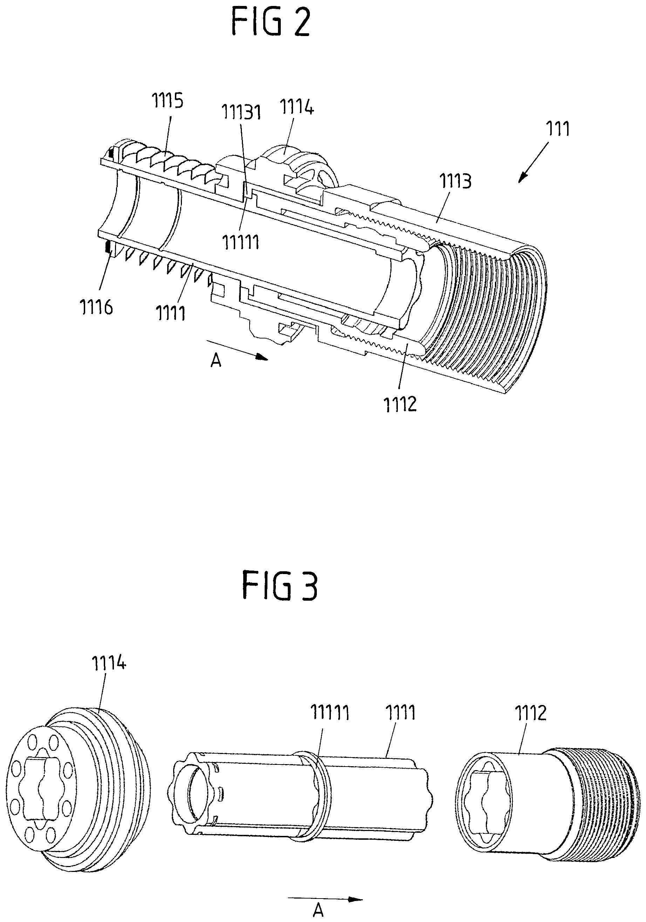

Stellvertretend für die beiden Verschlusseinheiten 111, 121 ist in Figur 2 die erste Verschlusseinheit 111 in einer Schnittdarstellung (entlang der Längsachse A) zur Veranschaulichung des Aufbaus dargestellt. Die erste Verschlusseinheit 111 umfasst eine Antriebshülse 1111, eine Verschlusshülse 1112, ein Gehäuse 1113 und ein Betätigungselement 1114. Die Antriebshülse 1111, die Verschlusshülse 1112 und das Gehäuse 1113 sind hülsenförmig (zylinderförmig) ausgebildet und erstrecken sich konzentrisch um die Längsachse A. Das Betätigungselement 1114 ist als Antriebsrad ausgebildet, das sich abschnittsweise um das Gehäuse 1113 herum erstreckt und für einen Benutzer zugänglich ist. Das Betätigungselement 1114 ist drehfest mit der Antriebshülse 1111 verbunden. Die Antriebshülse 1111 ist drehfest mit der Verschlusshülse 1112 verbunden. Dafür sind das Betätigungselement 1114 (als Nabe) und die Verschlusshülse 1112 (als Nabe) auf die Antriebshülse 1111 (als Welle) aufgeschoben. Zur Herstellung einer drehfesten Verbindung weisen die Antriebshülse 1111 abschnittsweise ein Profil der Außenoberfläche und die Verschlusshülse 1112 und das Betätigungselement 1114 jeweils abschnittsweise ein komplementäres Profil der Innenoberfläche auf, die um die Längsachse A nicht rotationssymmetrisch sind.

Zur Veranschaulichung des Profils ist in Figur 3 eine Explosionsdarstellung der drehfest miteinander verbundenen Elemente der ersten Verschlusseinheit 111, nämlich des Betätigungselements 1114, der Antriebshülse 1111 und der Verschlusshülse 1112 dargestellt. Das Profil umfasst in dieser Ausführungsform ein Polygonprofil. Durch das Polygonprofil kann eine drehfeste Verbindung erreicht werden.

Das Betätigungselement 1114 ist drehbar auf dem Gehäuse 1113 gelagert. Dafür weisen das Betätigungselement 1114 (auf seiner Innenoberfläche) und das Gehäuse 1113 (auf seiner Außenoberfläche) jeweils einen Abschnitt mit einem um die Längsachse A rotationssymmetrischen (kreisrunden) Profil auf.

Die Verschlusshülse 1112 ist ferner um die Längsachse A drehbar in dem Gehäuse 1113 gelagert. Dafür weisen die Verschlusshülse 1112 (auf ihrer Außenoberfläche) und das Gehäuse 1113 (auf seiner Innenoberfläche) jeweils einen Abschnitt mit einem um die Längsachse A rotationssymmetrischen (kreisrunden) Profil auf, wobei diese Abschnitte zur drehbaren Lagerung zusammenwirken. Ferner weist die Verschlusshülse 1112 (abschnittsweise) auf ihrer Außenoberfläche ein Gewinde auf. Ein komplementäres Gewinde ist (abschnittsweise) auf der Innenoberfläche des Gehäuses 1113 ausgebildet. Das Gehäuse 1113 und die Verschlusshülse 1112 wirken über das Innenbeziehungsweise Außengewinde zusammen. Die Gewinde erstrecken sich im Wesentlichen entlang der Längsachse A.

Wird das Betätigungselement 1114 betätigt (um die Längsachse A gedreht), so wird auch die Antriebshülse 1111 in Rotation (um die Längsachse A) versetzt. Letztere nimmt die Verschlusshülse 1112 mit. Aufgrund der Gewinde wird die Rotation der Antriebshülse 1111 jedoch in eine Schraubbewegung (Rotation und Translation) der Verschlusshülse 1112 übersetzt. Eine Rotation des Betätigungselements 1114 hat demnach eine Schraubbewegung der Verschlusshülse 1112 entlang der Längsachse A innerhalb des Gehäuses 1113 zur Folge. Je nach Richtung der Rotation des Betätigungselements 1114 (im Uhrzeigersinn oder entgegen den Uhrzeigersinn) kann die Verschlusshülse 1112 aus dem Gehäuse 1113 heraus- oder in das Gehäuse 1113 hineingeschraubt werden. Um die Bewegung der Verschlusshülse 1112 innerhalb des Gehäuses 1113 in eine Richtung (nämlich weg von der zweiten Kupplungseinheit 12) zu begrenzen, weist das Gehäuse 1113 an einem ersten axialen Ende einen Vorsprung 11131 auf. Im komplett eingeschraubten Zustand liegt die Verschlusshülse 1112 mit einem ersten Ende an diesem Vorsprung 11131 an (Figur 2). Gleichzeitig liegt die Verschlusshülse 1112 mit dem ersten Ende an einem Vorsprung 11111 der Antriebshülse 1111 an. Dabei (im komplett eingeschraubten Zustand) ragt das Gehäuse 1113 entlang der Längsachse A mit seinem dem ersten axialen Ende gegenüberliegenden zweiten (freien) axialen Ende über das zweite (freie) Ende der Verschlusshülse 1112 (in Richtung der zweiten Kupplungseinheit 12) hinaus. Das freie Ende des Gehäuses 1113 ermöglicht der Verschlusshülse 1112, sich über das zweite axiale Ende hinaus aus dem Gehäuse 1113 heraus zu bewegen. Wenn die Verschlusshülse 1112 so weit aus dem Gehäuse 1113 herausragt, dass die um die Längsachse A rotationssymmetrischen Profile des Gehäuses 1113 und der Verschlusshülse 1112 nicht (mehr) zusammenwirken, so ist die Verschlusshülse 1112 an dem Gehäuse 1113 mittels der Gewinde des Gehäuses 1113 und der Verschlusshülse 1112 drehbar gelagert.

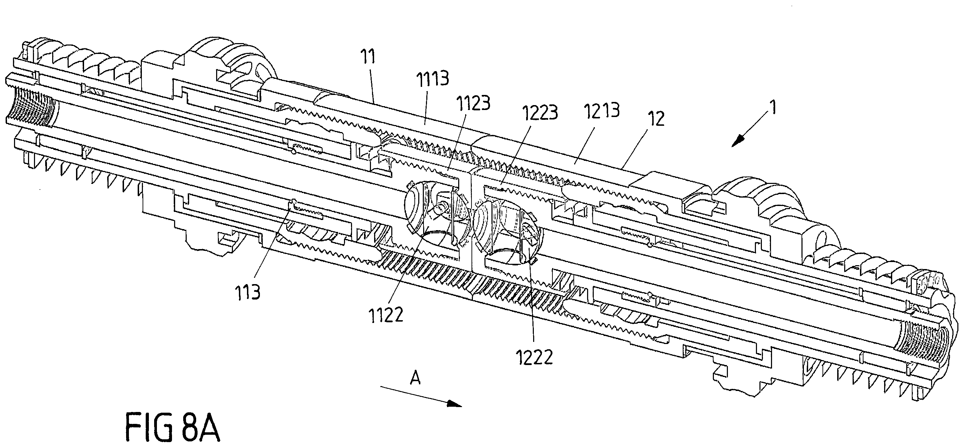

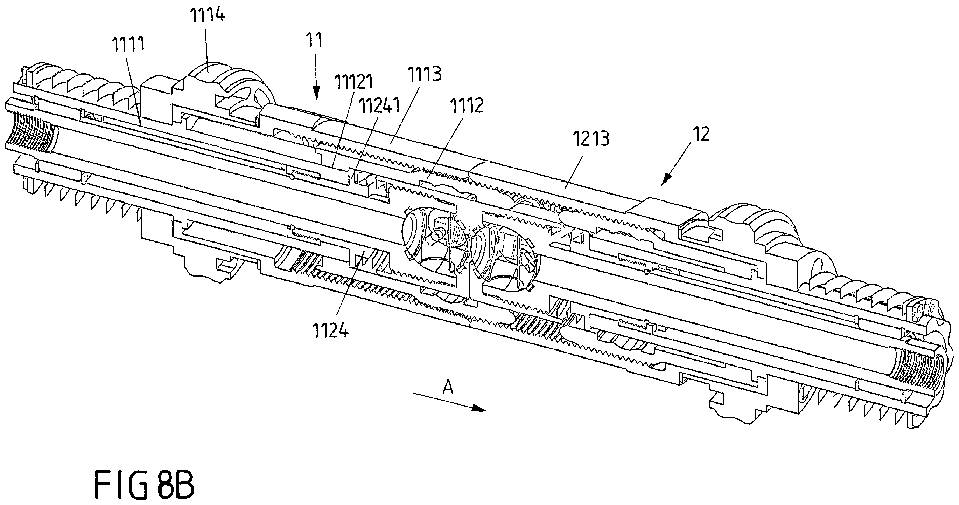

Das Gehäuse 1113 ist (entlang der Längsachse A betrachtet) länger als die Verschlusshülse 1112. Damit kann die Verschlusshülse 1112 bezüglich des Gehäuses 1113 prinzipiell drei verschiedene Positionen einnehmen: a) das freie Ende des Gehäuses 1113 kann über das freie Ende der Verschlusshülse 1112 hinausragen (Figur 1); b) das freie Ende des Gehäuses 1113 und das freie Ende der Verschlusshülse 1112 können bündig miteinander abschließen (Figur 8a); c) das freie Ende der Verschlusshülse 1112 kann über das freie Ende des Gehäuses 1113 hinausragen (Figur 8b). Die Möglichkeit, Position a) anzunehmen, führt dazu, dass die erste Kupplungseinheit 11 als passive Kupplungseinheit verwendet werden kann, in deren Gehäuse 1113 eine Verschlusshülse einer anderen (aktiven) Kupplungseinheit hineinragen kann. Die Möglichkeit, Position c) anzunehmen, führt dazu, dass die erste Kupplungseinheit 11 als aktive Kupplungseinheit verwendet werden kann, deren Verschlusshülse 1112 in das Gehäuse einer anderen (passiven) Kupplungseinheit hineinragen kann. Die erste Kupplungseinheit 11 (und die zur ersten Kupplungseinheit 11 identische zweite Kupplungseinheit 12) aus Figur 1 ist damit als androgyn anzusehen.

Ferner ist eine Wellenfeder 1115 auf die Antriebshülse 1111 geschoben, die axial zwischen einer Federdruckscheibe 1116 und dem Betätigungselement 1114 (beziehungsweise der Gruppe, die das Betätigungselement 1114, die Verschlusshülse 1112 und das Gehäuse 1113 umfasst) angeordnet ist. Die Federdruckscheibe 1116 ist fest an der Antriebshülse 1111 angeordnet. Die Wellenfeder 1115 ist entlang der Längsachse A komprimierbar. Beispielsweise wird die Wellenfeder 1115 beim Kopplungsvorgang der beiden Kupplungseinheiten 11, 12 komprimiert (Figuren 8a bis 8e). Beim Entkoppeln der beiden Kupplungseinheiten 11, 12 drängt die Wellenfeder in ihre Gleichgewichtslage und unterstützt den Entkopplungsvorgang. Im Gleichgewichtszustand (im entkoppelten Zustand) hält die Wellenfeder 1115 die Antriebshülse 1111 bezüglich des Betätigungselements 1114 (der Verschlusshülse 1112 und des Gehäuses 1113) axial in einer definierten Position. Die Wellenfeder 1115 drückt dabei einen Vorsprung des Betätigungselements 1114 in Richtung des Vorsprungs 11131 des Gehäuses 1113 und des Vorsprungs 11111 der Antriebshülse 1111, die wiederum gegen einen Vorsprung 11121 der Verschlusshülse 1112 drücken. Der Vorsprung des Betätigungselements 1114 kann dabei direkt gegen den Vorsprung 11131 des Gehäuses 1113 und den Vorsprung 11111 der Antriebshülse 1111 drücken oder indirekt, beispielsweise mittels eines Gleitrings, der eingesetzt werden kann, um Reibung zu vermeiden. Durch die Gewinde, die in dem Gehäuse 1113 und der Verschlusshülse 1112 ausgebildet sind, wirkt eine Gegenkraft auf die Wellenfeder 1115, so dass ein axiales Verschieben des Betätigungselements 1114 (beziehungsweise der Gruppe, die das Betätigungselement 1114, die Verschlusshülse 1112 und das Gehäuse 1113 umfasst) durch die Wellenfeder 1115 verhindert wird.

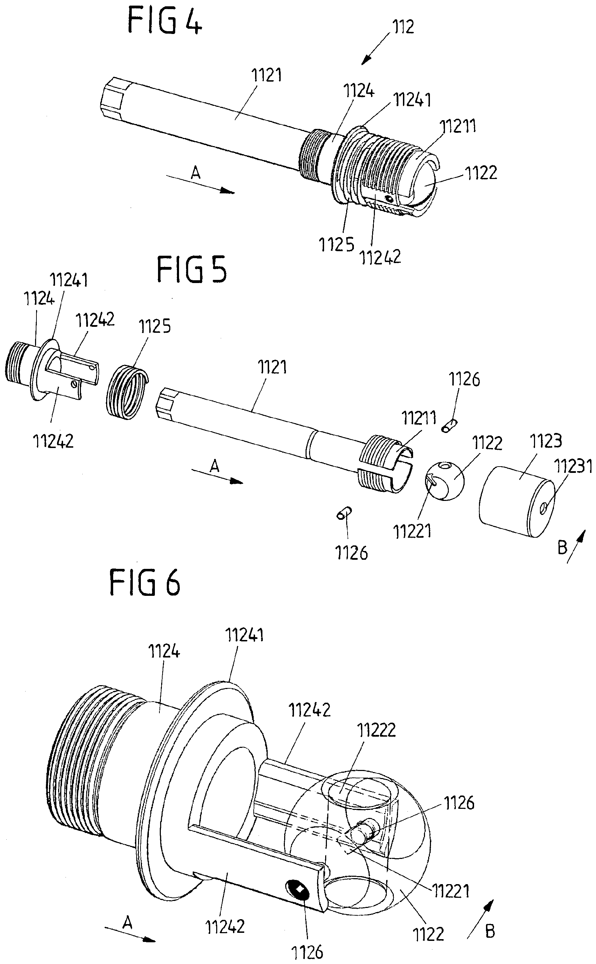

Stellvertretend für die beiden Ventileinheiten 112, 122 ist die erste Ventileinheit 112 in Figur 4 perspektivisch und in Figur 5 in einer Explosionsdarstellung zur Veranschaulichung des Aufbaus dargestellt. Die erste Ventileinheit 112 umfasst als zentrales Element eine röhrenförmige Fluidleitung 1121, die sich entlang der Längsachse A erstreckt. Die Fluidleitung 1121 ist über ihr erstes axiales Ende (in Figur 4 links dargestellt) an ein fluidführendes System anschließbar. An dem dem ersten axialen Ende gegenüberliegenden zweiten axialen Ende (in Figur 4 rechts dargestellt) weist die Fluidleitung 1121 eine Aufnahme 11211 für eine Ventilkugel 1122 auf. Die Aufnahme 11211 ist im Wesentlichen als Hohlzylinder ausgebildet, dessen Mantelfläche beispielhaft zwei Unterbrechungen aufweist, die sich jeweils entlang der Längsachse A erstrecken und die Mantelfläche in zwei Schalen unterteilt. Alternativ kann/können nur eine oder mehr als zwei Unterbrechungen vorgesehen sein. Gemäß einer weiteren Alternative kann die Mantelfläche durchgängig (ohne die Unterbrechungen) ausgebildet sein. Die Ventilkugel dient der Herstellung und Unterbrechung einer fluidischen Verbindung der Fluidleitung 1121 der ersten Kupplungseinheit 11 mit einer Fluidleitung der zweiten Kupplungseinheit. Die Ventilkugel weist einen Durchmesser auf, der größer als der Innendurchmesser der Fluidleitung 1121 ist. Die Ventilkugel 1122 ist in der Aufnahme 11211 angeordnet. Um die Ventilkugel 1122 in der Aufnahme zu halten, ist eine Ventilkappe 1123 vorgesehen, die an der Aufnahme befestigt ist (Figur 5). Der Übersichtlichkeit halber ist die Ventilkappe in Figur 4 nicht dargestellt. In dem in den Figuren 4 und 5 dargestellten Ausführungsbeispiel ist zur Befestigung der Ventilkappe 1123 an der Aufnahme 11211 eine Schraubverbindung vorgesehen. Hierfür weist die Aufnahme 11211 auf ihrer Außenoberfläche ein Gewinde auf. Ein komplementäres Gewinde ist auf der Innenoberfläche der Ventilkappe 1123 ausgebildet. Die Ventilkappe 1123 weist eine Öffnung 11231 auf, durch die Fluid (im bestimmungsgemäß angeordneten Zustand der Ventilkappe 1123) in die Aufnahme 11211 hinein beziehungsweise aus der Aufnahme 11211 heraus strömen kann. Die Öffnung 11231 ist in einer Fläche der Ventilkappe 1123 ausgebildet, die sich im Wesentlichen senkrecht zu der Längsachse A erstreckt. Beispielsweise ist die Öffnung 11231 koaxial mit der Fluidleitung 1121 angeordnet.

Die erste Ventileinheit 112 weist ferner einen Schieber 1124 auf, der auf die Fluidleitung 1121 geschoben ist. Dabei ist der Schieber 1124 entlang der Längsachse A gegenüber der Fluidleitung 1121 verschiebbar. Der Schieber 1124 weist einen Vorsprung 11241 auf, der sich im Wesentlichen senkrecht zu der Längsachse A erstreckt. Zwischen dem Vorsprung 11241 und der Aufnahme 11211 ist eine Wellenfeder 1125 vorgesehen. Die Wellenfeder 1125 ist entlang der Längsachse A komprimierbar und hält den Schieber 1124 bezüglich der Fluidleitung 1121 (bezüglich der Aufnahme 11211 und der in der Aufnahme 11211 angeordneten Ventilkugel 1122) axial in einer definierten Position, sofern die Wellenfeder 1125 im Gleichgewichtszustand ist. Die Wellenfeder 1125 dient auch dazu eine Translationsbewegung des Schiebers 1124 entlang der Längsachse A in Richtung der Aufnahme 11211 auf die Fluidleitung 1121 zu übertragen.

Der Schieber 1124 weist ferner zwei Arme 11242 auf, die sich entlang der Längsachse A erstrecken. Durch die zwei Unterbrechungen der Mantelfläche der Aufnahme 11211 ragen die beiden Arme 11242 axial in die Aufnahme 11211 hinein. Sofern die Mantelfläche der Aufnahme 11211 durchgängig (ohne Unterbrechungen) ausgebildet ist, sind zwei Durchgangsöffnungen in einer zum ersten axialen Ende der Fluidleitung 1121 gerichteten Stirnfläche der Aufnahme 11211 vorgesehen, durch die die beiden Arme 11242 axial in die Aufnahme 11211 hineinragen. Die Arme 11242 sind spiegelbildlich angeordnet, wobei die Längsachse A in der Spiegelebene liegt. Zwei Stifte 1126 sind vorgesehen, um eine Verbindung zwischen den Armen 11242 und der Ventilkugel 1122 herzustellen, wobei jeder Stift 1126 durch jeweils einen Arm 11242 und eine Unterbrechung der Mantelfläche der Aufnahme 11211 in die Aufnahme 11211 hineinragt. Sofern keine Unterbrechung der Mantelfläche der Aufnahme 11211 vorgesehen ist, können in der Aufnahme 11211 entsprechende Öffnungen zur Aufnahme der Stifte 1126 vorgesehen sein. Dabei sind die Stifte 1126 auf einer Achse B angeordnet, die sich im Wesentlichen senkrecht zu der Längsachse A erstreckt. Die Achse B erstreckt sich zudem (unabhängig von der Relativposition von Schieber 1124 und Ventilkugel 1122) parallel versetzt zu einer zentralen Achse der der Ventilkugel 1122, die durch den Mittelpunkt der Ventilkugel 1122 verläuft. In der Ausführungsform aus Figur 5 sind die Stifte 1126 als von dem Schieber 1124 separat ausgebildete Elemente dargestellt, die erst eingesetzt werden, wenn die Arme 11242 des Schiebers 1124 bestimmungsgemäß in die Aufnahme 11211 hineinragen. Alternativ können die Stifte 1126 an den Armen 11242 des Schiebers 1124 befestigt sein, bevor die Arme 11242 in die Aufnahme 11211 eingeführt werden. In diesem Fall ist die Form der Durchgangsöffnungen in der Aufnahme 11211, durch die die Arme 11242 in die Aufnahme 11211 hineinragen, entsprechend anzupassen.

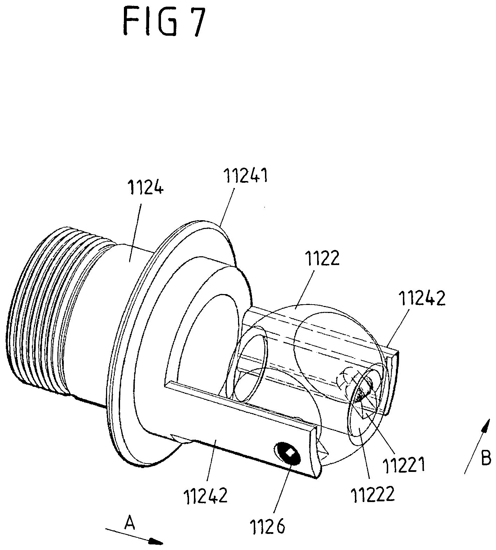

In den Figuren 6 und 7 ist dargestellt, wie die Stifte 1126 mit der Ventilkugel 1122 zusammenwirken. Die Ventilkugel 1122 weist hierfür zwei längliche (geradlinige) Ausnehmungen 11221 auf, in die die Stifte 1126 bestimmungsgemäß hineinragen. Die Ventilkugel 1122 ist an zwei gegenüberliegenden Seiten abgeflacht, wobei die jede längliche Ausnehmung 11221 in jeweils eine der beiden (durch die Abflachung gebildeten) ebenen Flächen ausgebildet ist. Die ebenen Flächen erstrecken sich im Wesentlichen parallel zu der Längsachse A. Durch den parallelen Versatz der Achse B, auf der die Stifte 1126 angeordnet sind, zu einer zentralen Achse der Ventilkugel 1122, die durch den Mittelpunkt der Ventilkugel 1122 verläuft, kann erreicht werden, dass eine Bewegung des Schiebers 1124 (und damit der Stifte 1126) relativ zu der Fluidleitung 1121 (und damit der Ventilkugel 1122 in der Aufnahme 11211) entlang der Längsachse A eine Rotation der Ventilkugel 1122 um eine zentrale Achse der Ventilkugel 1122, die durch den Mittelpunkt der Ventilkugel 1122 und senkrecht zu der Längsachse A verläuft, in der Aufnahme 11211 bewirkt.

Die Ventilkugel 1122 weist eine Durchgangsöffnung 11222 auf, die sich beispielsweise zylinderförmig durch die gesamte Ventilkugel 1122 erstreckt. Dabei ist die Durchgangsöffnung 11222 (beziehungsweise deren Einlass und Auslass) in einer Ebene angeordnet, die sich im Wesentlichen senkrecht zu der Achse B erstreckt. Durch die Bewegung des Schiebers 1124 ist die Ventilkugel 1122 zwischen einer ersten Position, in der sich die Durchgangsöffnung 11222 im Wesentlichen entlang der Längsachse A erstreckt, und einer zweiten Position, in der sich die Durchgangsöffnung 11222 im Wesentlichen senkrecht zu der Längsachse A erstreckt, drehbar. Die Drehung erfolgt um eine zentrale Achse der Ventilkugel 1122, die durch den Mittelpunkt der Ventilkugel 1122 und parallel zu der Achse B verläuft. In der ersten Position gibt die Ventilkugel 1122 die Fluidleitung 1121 maximal frei und ermöglicht die Herstellung einer fluidischen Verbindung mit der zweiten Ventileinheit 122 der zweiten Kupplungseinheit 12 (Figur 7). Je nach Wahl der Innendurchmesser der Fluidleitung 1121 und der Durchgangsöffnung 11222 wird die Fluidleitung 1121 vollständig (Innendurchmesser der Fluidleitung 1121 ist kleiner oder gleich dem Innendurchmesser der Durchgangsöffnung 11222) oder nur teilweise (Innendurchmesser der Fluidleitung 1121 ist größer als der Innendurchmesser der Durchgangsöffnung 11222) freigegeben. In der zweiten Position verschließt die Ventilkugel 1122 die Fluidleitung 1121 vollständig und unterbricht die fluidische Verbindung mit der zweiten Ventileinheit 122 der zweiten Kupplungseinheit 12 (Figur 6).

Um eine solche 90° Drehung der Ventilkugel 1122 um eine zentrale Achse der Ventilkugel 1122 zu erreichen, ist bei einem Kugeldurchmesser von 23 mm eine Linearbewegung des Schiebers 1124 entlang der Längsachse A um 7,4 mm erforderlich. Dabei sind die Stifte 1126, die auf der Achse B angeordnet sind, von der (zur Achse B parallelen) zentralen Achse der Ventilkugel 1122, die durch den Mittelpunkt der Ventilkugel verläuft, versetzt. Der Versatz beträgt, wenn der Schieber 1124 und die Ventilkugel 1122 derart zueinander angeordnet sind, dass die Ventilkugel 1122 in der ersten beziehungsweise zweiten Position ist, +3,7mm beziehungsweise -3,7mm von dieser zentralen Achse der Ventilkugel 1122 entlang der Längsachse A und jeweils 3,7 mm von der zentralen Achse der Ventilkugel 1122 senkrecht zur Längsachse A und senkrecht zu der zentralen Achse der Ventilkugel 1122. Der Innendurchmesser der Durchgangsöffnung 11222 ist dabei 10 mm oder kleiner. Um eine Ventilkugel 1122 mit einem größeren Innendurchmesser der Durchgangsöffnung 11221 einsetzen zu können und dabei weiterhin eine 90° Drehung der Ventilkugel 1122 zu ermöglichen, kann die Kupplungseinheit 11 insgesamt oder teilweise (insbesondere der Kugeldurchmesser, das Ausmaß der Linearbewegung des Schiebers 1124 und der Versatz des Stifte 1126 von der zentralen Achse der Ventilkugel 1122) skaliert werden.

Zur Herstellung einer Verbindung zwischen der ersten Ventileinheit 112 und der ersten Verschlusseinheit 111 ist der Schieber 1124 der ersten Ventileinheit 112 an der Antriebshülse 1111 der ersten Verschlusseinheit 111 befestigt. Hierzu weist der Schieber 1124 auf seiner Außenoberfläche ein Gewinde auf, das mit einer Verschlussmutter 113 zusammenwirkt (Figur 8a beispielsweise). Das Gewinde ist von dem Vorsprung 11241 des Schiebers 1124 axial beabstandet, so dass zwischen der Verschlussmutter 113 und dem Vorsprung 11241 des Schiebers 1124 ein Vorsprung der Antriebshülse 1111 anordenbar ist. Dabei weisen der Abschnitt des Schiebers 1124 zwischen dem Gewinde und dem Vorsprung 11241 eine bezüglich der Längsachse A rotationssymmetrische Außenoberfläche und der Vorsprung der Antriebshülse 1111 eine bezüglich der Längsachse A rotationssymmetrische Innenoberfläche auf, so dass die Antriebshülse 1111 drehbar auf dem Schieber 1124 gelagert ist. Damit kann die Ventileinheit 112 in der Verschlusseinheit 111 um die Längsachse A rotieren. Somit wird die Drehbewegung des Betätigungselements 1114, die auf die Antriebshülse 1111 übertragbar ist, nicht auf die Ventileinheit 112 übertragen. Dies ist insbesondere vorteilhaft, da die Fluidleitung 1121 (als Teil der Ventileinheit 112) über ihr erstes axiales Ende an ein fluidführendes System anschließbar ist, das entweder durch eine Drehung der Ventileinheit 112 um die Längsachse beschädigt werden könnte oder eine Drehung der Ventileinheit 112 um die Längsachse A und damit eine Drehung des Betätigungselements 1114 behindern würde. Bestimmungsgemäß ist der Vorsprung der Antriebshülse 1111 axial zwischen der Verschlussmutter 113 und dem Vorsprung 11241 des Schiebers 1124 eingeklemmt ist. Eine Bewegung des Schiebers 1124 entlang der Längsachse A hat damit auch eine Axialverschiebung der Antriebshülse 1111 zur Folge. Da die Antriebshülse 1111 lediglich drehfest mit der Verschlusshülse 1112 und dem Betätigungselement 1114 verbunden ist, kann sich die Antriebshülse 1111 dabei axial bezüglich der Verschlusshülse 1112 und dem Betätigungselement 1114 verschieben.

Unter Bezugnahme auf die Figuren 8a bis 8e wird im Folgenden beschrieben, wie eine mechanische und eine fluidische Verbindung zwischen der ersten Kupplungseinheit 11 und der zweiten Kupplungseinheit 12 aus Figur 1 hergestellt wird. Da die Kupplungseinheiten 11, 12 identisch aufgebaut sind, werden für gleiche Elemente der beiden Kupplungseinheiten 11, 12 entsprechende Bezugszeichen verwendet. Die Bezugszeichen der beiden Kupplungseinheiten unterscheiden sich lediglich darin, dass sie entweder mit 11 (erste Kupplungseinheit) oder 12 (zweite Kupplungseinheit) beginnen.

Zur Herstellung des gekoppelten Zustands werden zunächst die erste und die zweite Kupplungseinheit 11, 12 in der Ausgangskonfiguration bereitgestellt. In dieser Ausgangskonfiguration sind die Ventilkugeln 1122, 1222 jeweils in der zweiten Position angeordnet und die Ventilkappen 1123, 1223 schließen bündig mit dem dazugehörigen Gehäuse 1113, 1213 ab. Die erste und die zweite Kupplungseinheit 11, 12 werden in der Ausgangskonfiguration entlang der Längsachse A hintereinander angeordnet, wobei die Kupplungseinheiten 11, 12 derart zueinander ausgerichtet werden, dass die Ventilkappen 1123, 1223 einander zugewandt sind. In dem dargestellten Beispiel werden die Kupplungseinheiten 11, 12 derart angeordnet, dass die beiden Ventilkappen 1123, 1223 und die Gehäuse 1113, 1213 aneinander anliegen (Figur 8a). Alternativ ist es auch möglich, die beiden Kupplungseinheiten 11, 12 in einem Abstand zueinander anzuordnen. In jedem Fall ist die Relativlage (Abstand, Drehwinkel um die Längsachse A) der beiden Kupplungseinheiten 11, 12 so zu wählen, dass die Gewinde der beiden Gehäuse 1113, 1213 in Phase sind, so dass das Gewinde der Verschlusshülse 1112 der aktiven (ersten) Kupplungseinheit 11 sowohl mit dem Gewinde des Gehäuses 1113 der aktiven (ersten) Kupplungseinheit 11 als auch mit dem Gewinde des Gehäuses 1213 der passiven (zweiten) Kupplungseinheit 12 zusammenwirken kann. Zur Positionierung in einer korrekten Relativlage kann beispielsweise eine mechanische Vorrichtung herangezogen werden.

Anschließend wird das Betätigungselement 1114 der ersten Kupplungseinheit 11 betätigt (um die Längsachse A gedreht). Die erste Kupplungseinheit 11 stellt damit in dem vorliegenden Ausführungsbeispiel die aktive Kupplungseinheit dar und die zweite Kupplungseinheit 12 die passive. Durch die Drehung des Betätigungselements 1114 wird die Antriebshülse 1111 in Drehung versetzt, die wiederum die Verschlusshülse 1112 mitnimmt. Da die Verschlusshülse 1112 über ihr Außengewinde mit dem Innengewinde des Gehäuses 1113 zusammenwirkt, wird die Drehung der Antriebshülse 1111 in eine Schraubbewegung der Verschlusshülse 1112 übersetzt, wobei sich die Verschlusshülse 1112 der ersten Kupplungseinheit 11 auf die zweite Kupplungseinheit 12 zubewegt. Bei anhaltender Betätigung des Betätigungselements erreicht die Verschlusshülse 1112 schließlich das freie (der zweiten Kupplungseinheit 12 zugewandte) Ende des Gehäuses 1113 und ragt in das Gehäuse 1213 der zweiten Kupplungseinheit 12 hinein. Dabei wechselwirkt das Außengewinde der Verschlusshülse 1112 der ersten Kupplungseinheit 11 mit dem Innengewinde des Gehäuses 1213 der zweiten Kupplungseinheit 12 unter Ausbildung einer mechanischen Verbindung zwischen den beiden Kupplungseinheiten 11, 12 (Figur 8b). In Figur 8b hat der Vorsprung 11121 der Verschlusshülse 1112, der zusammen mit dem Vorsprung 11241 des Schiebers 1124 ein Mittel zur Übertragung der Translationsbewegung der Verschlusshülse 1112 auf den Schieber 1124 darstellt, den Vorsprung 11241 des Schiebers 1124 erreicht.

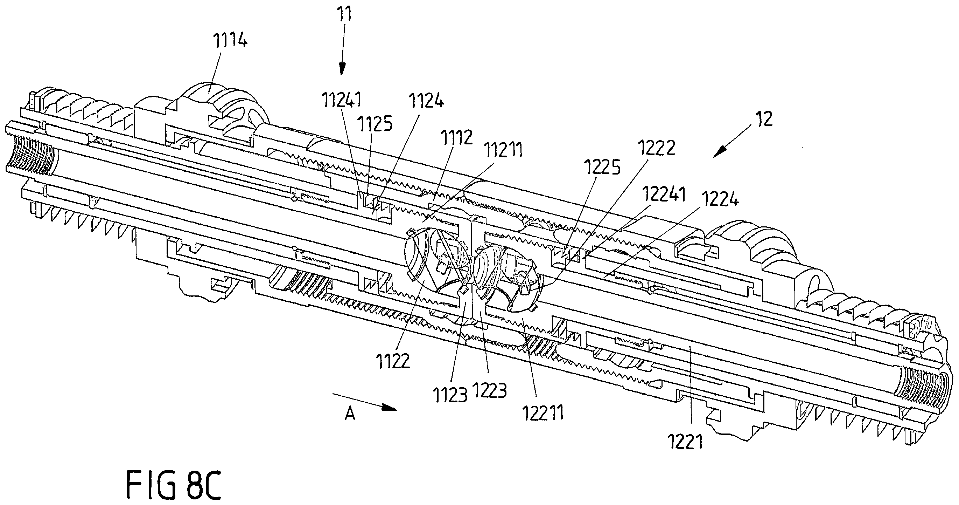

Durch anhaltende Betätigung des Betätigungselements 1114 wird nun die Translationsbewegung der Verschlusshülse 1112 entlang der Längsachse A auf den Schieber 1124 übertragen. Aufgrund der der Translationsbewegung der Verschlusshülse 1112 entgegengesetzten Kraft, die von der zweiten Ventileinheit 122 auf die Ventilkappe 1123 und Aufnahme 11211 der ersten Ventileinheit 112 wirkt, hat dies einerseits zur Folge, dass sich innerhalb der ersten Kupplungseinheit 11 der Schieber 1124 bezüglich der Aufnahme 11211, in der die Ventilkugel 1122 angeordnet ist, bewegt, so dass eine Rotation der Ventilkugel 1122 um eine zentrale Achse innerhalb der Aufnahme 11211 erfolgt. Dabei wird die Kugel aus der zweiten Position gebracht und in Richtung der ersten Position gedreht (Figur 8c). Andererseits haben die Linearbewegung des Schiebers 1124 der ersten Kupplungseinheit 11 und die entgegenwirkende Kraft der zweiten Ventileinheit 122 zur Folge, dass die Wellenfeder 1125 zwischen dem Vorsprung 11241 des Schiebers 1124 und der Aufnahme 11211 komprimiert wird. Dabei wird (mittels der Feder 1125) ein Teil der Kraft des Schiebers 1124 auf die Aufnahme 11211 übertragen. Die Wellenfeder 1125 bildet zusammen mit dem Vorsprung 11241 des Schiebers 1124 ein Mittel zur Übertragung der Translationsbewegung der Verschlusshülse 1112 auf die Fluidleitung 1121. Die Aufnahme 11211 ist mit der Ventilkappe 1123 der ersten Kupplungseinheit 11 fest verbunden, die an der Ventilkappe 1223 der zweiten Kupplungseinheit 12 anliegt. Somit wird die Translationsbewegung des Schiebers 1124 der ersten Kupplungseinheit 11 zum Teil auf die Ventilkappe 1223 der zweiten Kupplungseinheit 12 übertragen. Mit der Ventilkappe 1223 bewegen sich auch die Fluidleitung 1221 und die Ventilkugel 1222 der zweiten Kupplungseinheit 12 entlang der Längsachse A (in Richtung von der ersten Kupplungseinheit 11 zu der zweiten Kupplungseinheit 12). Dabei gleitet die Aufnahme 12211 mit der Ventilkugel 1222 der zweiten Kupplungseinheit 12 auf den Schieber 1224 der zweiten Kupplungseinheit 12 zu. Durch die Relativbewegung der Ventilkugel 1222 und dem Schieber 1224 wird die Ventilkugel 1222 der zweiten Kupplungseinheit 12 ebenfalls in Rotation (um eine zentrale Achse der Ventilkugel 1222) versetzt (Figur 8c). Dabei wird auch die Wellenfeder 1225 zwischen dem Vorsprung 12241 des Schiebers 1224 und der Aufnahme 12211 der zweiten Kupplungseinheit 12 komprimiert. Sobald sich die Ventilkappen 1123, 1223 der ersten und zweiten Ventileinheit 111, 121 berühren und innerhalb der aktiven Kupplungseinheit die Translationsbewegung der Verschlusshülse 1112 entlang der Längsachse A auf den Schieber 1124 übertragen wird, werden beide Ventilkugeln 1122, 1222 aus der zweiten Position in Richtung der ersten Position gedreht.

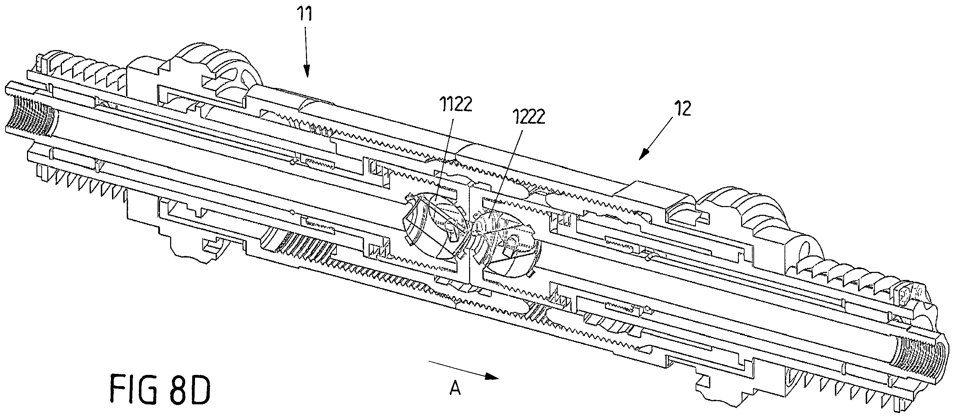

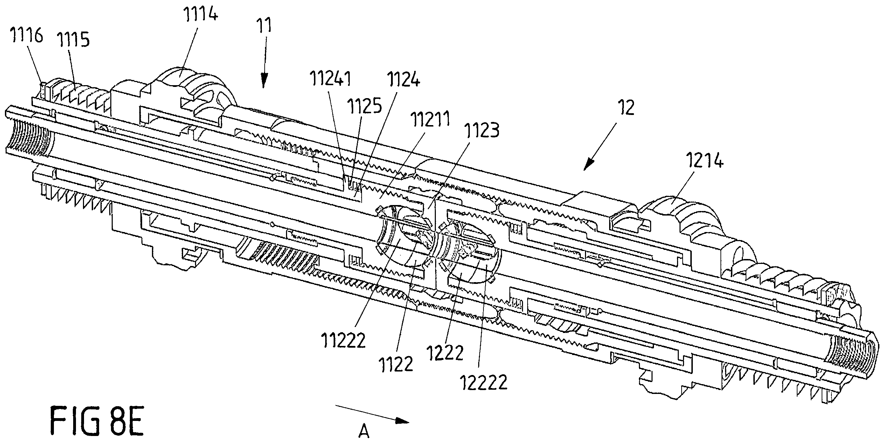

Wird das Betätigungselement 1114 der ersten Kupplungseinheit 11 weiter betätigt, so wird die Rotation der Ventilkugeln 1122, 1222 fortgesetzt (Figur 8d) bis der Vorsprung 11241 des Schiebers 1124 der ersten Kupplungseinheit 11 in seiner Bewegung gehindert wird. Diese Situation kann eintreten, wenn der Vorsprung 11241 des Schiebers 1124 die Aufnahme 11211 oder die Ventilkappe 1123 erreicht oder bis die Wellenfeder 1125 maximal komprimiert worden ist (Figur 8e). In Figur 8e ragt die Ventilkappe 1123 axial in Richtung des Schiebers 1124 über die Aufnahme 11211 hinaus und ist der Durchmesser der Ventilkappe 1123 so bemessen, dass der Schieber 1124 zur Anlage mit der Ventilkappe 1123 gebracht werden kann. In diesem Beispiel wird der Vorsprung 11241 des Schiebers 1124 der ersten Kupplungseinheit 11 in seiner Bewegung gehindert, wenn der Vorsprung 11241 des Schiebers 1124 die Ventilkappe 1123 erreicht. Der Weg des Schiebers 1124 zwischen seiner Ausgangsposition (Figur 8a) und seiner Endposition (Figur 8e) ist so bemessen, dass die Ventilkugeln 1122, 1222 in der ersten Position sind, wenn der Schieber 1124 seine Endposition erreicht hat. Wenn die beiden Ventilkugeln 1122, 1222 in der ersten Position sind, sind deren Durchgangsöffnungen 11222, 12222 und damit die beiden Kupplungseinheiten 11, 12 fluidisch miteinander verbunden.

Um den Kupplungsprozess umzukehren, kann das Betätigungselement 1114 der ersten Kupplungseinheit 11 in entgegengesetzte Richtung betätigt werden. Bei dem in den Figuren 8a bis 8e beschriebenen Kupplungsvorgang wird in der aktiven Kupplungseinheit 11 einerseits die Wellenfeder 1125 zwischen dem Vorsprung 11241 des Schiebers 1124 und andererseits die Wellenfeder 1115 zwischen der Federdruckscheibe 1116 und dem Betätigungselement 1114 komprimiert (aus der Gleichgewichtslage gebracht). Die Feder 1115 wird komprimiert, da der Schieber 1124 fest mit der Antriebshülse 1111 verbunden ist und die Antriebshülse 1111 mit sich zieht. Dadurch wird auch die Federdruckscheibe 1116, die an der Antriebshülse befestigt ist, mitgezogen und auf das Betätigungselement 1114 zu bewegt. Die zwischen der Federdruckscheibe 1116 und dem Betätigungselement 1114 angeordnete Wellenfeder 1115 wird damit komprimiert. Wird das Betätigungselement 1114 nun (zwecks Entkopplung der beiden Kupplungseinheiten 11, 12) in die entgegengesetzte Richtung bewegt, so nimmt die Kraft auf die Federn 1115, 1125 ab und diese (insbesondere die Wellenfeder 1115) drängen in ihre Gleichgewichtslage zurück, wodurch der Abstand zwischen der Federdruckscheibe 1116 und dem Betätigungselement 1114 erhöht wird und die Antriebshülse 1111 in Richtung ihrer Ausgangsposition (Figur 8a) gedrängt wird. Die Wellenfeder 1115 (und zu einem kleineren Anteil auch die Wellenfeder 1125) unterstützt damit die Entkopplung der beiden Kupplungseinheiten 11, 12.

Um den Kupplungsprozess umzukehren, kann alternativ die zweite Kupplungseinheit 12 (beziehungsweise das Gehäuse 1213 der zweiten Kupplungseinheit 12) um die Längsachse A gedreht werden, um die Schraubverbindung zwischen der Verschlusshülse 1112 der ersten Kupplungseinheit 11 und dem Gehäuse 1213 der zweiten Kupplungseinheit 12 zu lösen.

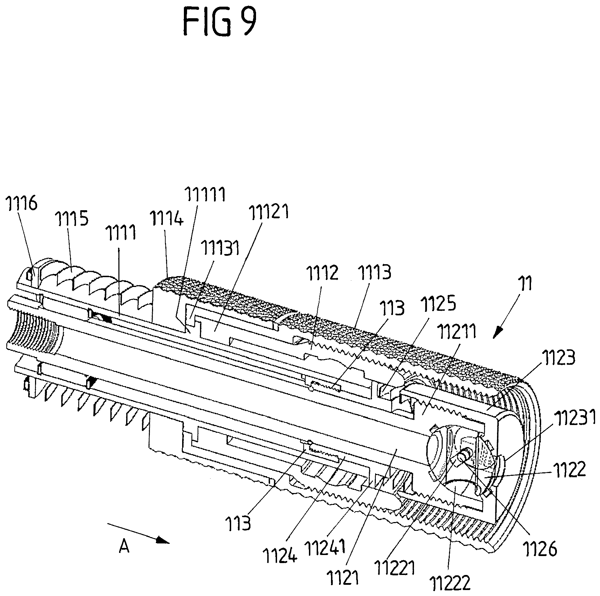

In Figur 9 ist eine erste Kupplungseinheit 11 gemäß einer weiteren Ausführungsform dargestellt. Diese unterscheidet sich von jener aus Figur 1 insbesondere in der Gestaltung der Außenoberfläche des Betätigungselements 1114 und des Gehäuses 1113. In der Ausführungsform aus Figur 9 weist die Außenoberfläche jeweils ein Rändelprofil auf, wodurch diese Kupplungseinheit 11 insbesondere für die manuelle Betätigung des Betätigungselements 1114 geeignet ist. Durch das Profil können das Gehäuse 1113 und das Betätigungselement sicher ergriffen und das Betätigungselement 1114 (nahezu) ohne Verrutschen bedient werden. Bei der Ausführungsform der Figur 1 sind die Außenoberflächen des Betätigungselements 1114 und des Gehäuses 1113 derart gestaltet, dass das Betätigungselement 1114 vorzugsweise durch eine Antriebseinheit betätigt werden kann. Hinsichtlich des übrigen Aufbaus der ersten Verschlusseinheit 111 und der ersten Ventileinheit 112 und hinsichtlich ihrer Funktionsweise unterscheiden sich die Kupplungseinheiten aus den Figuren 1 und 9 nicht. Eine Verschlusskupplung 1 kann daher nicht nur zwei Kupplungseinheiten gemäß der Ausführungsform der Figur 1 beziehungsweise 9 umfassen, sondern auch eine Kombination der beiden Ausführungsformen in einer Verschlusskupplung ist möglich. Ferner ist die Kombination der Kupplungseinheit 11 aus der Figur 1 beziehungsweise aus der Figur 9 mit jeder anderen Kupplungseinheit möglich, sofern letztere mit der Verschlusshülse 1112 und der Ventileinheit 112 der Kupplungseinheit 11 zusammenwirken kann.

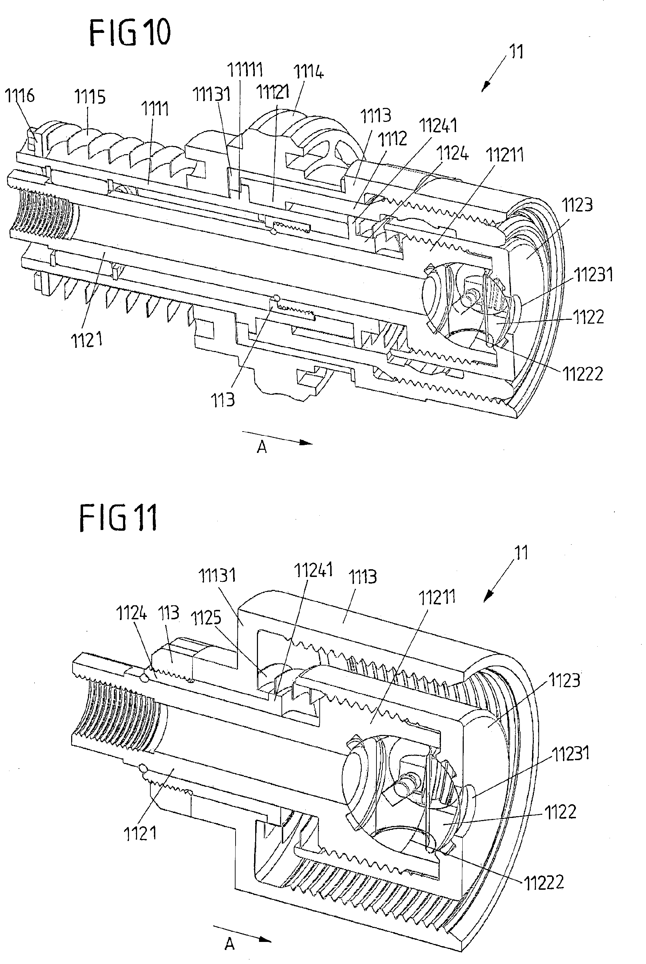

In Figur 10 ist eine erste Kupplungseinheit 11 gemäß einer weiteren Ausführungsform dargestellt, die nicht im Rahmen der Erfindung liegt. Diese unterscheidet sich von jener aus Figur 1 insbesondere darin, dass die Antriebshülse 1111, das Gehäuse 1113 und die Fluidleitung 1121 (entlang der Längsachse A betrachtet) derart verkürzt sind, dass die Verschlusshülse 1112 ausgehend von der in Figur 10 dargestellten Anordnung, in der die Verschlusshülse 1112 mit einem ersten Ende an dem Vorsprung 11131 des Gehäuses 1113 anliegt und mit einem zweiten (freien) Ende bündig mit dem freien Ende des Gehäuses 1113 abschließt, nur aus dem Gehäuse 1113 heraus bewegt werden kann. Die Länge der Verschlusshülse 1112 entspricht im Wesentlichen der Länge des Gehäuses 1113. Der übrige Aufbau und die Funktionsweise der Kupplungseinheit 11 aus Figur 10 entsprechen dem Aufbau und der Funktionsweise der Kupplungseinheiten aus Figur 1. Da die Verschlusshülse 1112 nicht derart in dem Gehäuse 1113 angeordnet sein kann, dass das Gehäuse 1113 mit seinem freien zweiten Ende axial über die Verschlusshülse 1112 hinausragt, kann die Kupplungseinheit 11 aus Figur 10 ausschließlich als aktive Kupplungseinheit dienen, die mit einer passiven Kupplungseinheit zusammenwirkt.

In Figur 11 ist eine erste Kupplungseinheit 11 gemäß einer weiteren Ausführungsform dargestellt, die nicht im Rahmen der Erfindung liegt. Diese unterscheidet sich von jener aus Figur 1 insbesondere darin, dass die Verschlusseinheit 111 lediglich ein Gehäuse 1113, jedoch kein Betätigungselement, keine Antriebshülse (und damit keine an der Antriebshülse befestigte Federdruckscheibe zur Lagerung einer Wellenfeder) und keine Verschlusshülse aufweist. Daher kann die Kupplungseinheit 11 aus Figur 11 ausschließlich als passive Kupplungseinheit dienen, die mit einer aktiven Kupplungseinheit zusammenwirkt.

Ferner ist die Fluidleitung 1121 (im Vergleich zu der Ausführungsform aus Figur 1) entlang der Längsachse A verkürzt. Das Gehäuse 1113 wird axial zwischen dem Vorsprung 11241 des Schiebers 1124 und der Verschlussmutter 113 gehalten, die auf den Schieber 1124 aufgeschraubt ist. Die Wellenfeder 1125 ist axial zwischen dem Vorsprung 11131 des Gehäuses 1113 und der Aufnahme 11211 der Fluidleitung angeordnet. Hier ist die Ausdehnung des Vorsprungs 11241 des Schiebers 1124 senkrecht zur Längsachse A derart bemessen (klein), dass er die Feder 1125 nicht behindert. Alternativ kann die Ausdehnung des Vorsprungs 11241 des Schiebers 1124 senkrecht zur Längsachse A größer sein, so dass die Wellenfeder 1125 ist axial zwischen dem Vorsprung 11241 des Schiebers 1124 und der Aufnahme 11211 der Fluidleitung angeordnet ist.

Das Funktionsprinzip der in den Figuren 10 und 11 dargestellten Kupplungseinheiten entspricht jenem, das anhand der Figuren 8a bis 8e beschrieben worden ist.

## Patentansprüche

1. Verschlusskupplung (1) umfassend eine erste Kupplungseinheit (11) und eine zweite Kupplungseinheit (12), die sich jeweils entlang einer Längsachse (A) erstrecken,
wobei die erste Kupplungseinheit (11) eine erste Ventileinheit (112) und eine erste Verschlusseinheit (111) umfasst und die zweite Kupplungseinheit (12) eine zweite Ventileinheit (122) und eine zweite Verschlusseinheit (121) umfasst,
wobei die erste und die zweite Ventileinheit (112, 122) ausgebildet sind, eine fluidische Verbindung zwischen der ersten und der zweiten Kupplungseinheit (11, 12) zu bilden,
wobei die erste und die zweite Verschlusseinheit (111, 121) ausgebildet sind, die erste Kupplungseinheit (11) und die zweite Kupplungseinheit (12) mechanisch miteinander zu verbinden, und
wobei die zweite Kupplungseinheit (12) identisch zu der ersten Kupplungseinheit (11) ausgebildet ist und die erste Kupplungseinheit (11) ein Betätigungselement (1114) umfasst, durch dessen Betätigung die erste und die zweite Kupplungseinheit (11, 12) über die erste und die zweite Verschlusseinheit (111, 121) mechanisch und über die erste und die zweite Ventileinheit (112, 122) fluidisch miteinander verbindbar sind,
**dadurch gekennzeichnet, dass**
die erste Verschlusseinheit (111) eine Antriebshülse (1111), die drehfest mit dem Betätigungselement (1114) verbunden ist, und eine Verschlusshülse (1112) umfasst, die drehfest mit der Antriebshülse (1111) verbunden ist.

2. Verschlusskupplung (1) nach Anspruch 1, **dadurch gekennzeichnet, dass** die erste Ventileinheit (112) innerhalb der ersten Verschlusseinheit (111) angeordnet ist und dass ein Teil der ersten Ventileinheit (112) entlang der Längsachse (A) relativ zu einem Teil der ersten Verschlusseinheit (111) verschiebbar ist.

3. Verschlusskupplung (1) nach Anspruch 1 oder 2, **dadurch gekennzeichnet, dass** die erste Verschlusseinheit (111) das Betätigungselement (1114) umfasst, wobei das Betätigungselement (1114) um die Längsachse (A) drehbar gelagert ist.

4. Verschlusskupplung (1) nach einem der vorherigen Ansprüche, **dadurch gekennzeichnet, dass** die erste Verschlusseinheit (111) ein Gehäuse (1113) mit einem Gewinde aufweist, dass die Verschlusshülse (1112) ein komplementäres Gewinde aufweist, und dass das Gewinde des Gehäuses (1113) und das Gewinde der Verschlusshülse (1112) derart zusammenwirken, dass eine Drehbewegung des Betätigungselements (1114) in einer Drehbewegung und einer Translationsbewegung der Verschlusshülse (1112) entlang der Längsachse (A) resultiert.

5. Verschlusskupplung (1) nach Anspruch 4, **dadurch gekennzeichnet, dass** die Verschlusshülse (1112) aus dem Gehäuse (1113) der ersten Verschlusseinheit (111) herausbewegbar ist und ausgebildet ist, mit der zweiten Kupplungseinheit (12), insbesondere mit der zweiten Verschlusseinheit (121), zusammenzuwirken, um die erste Kupplungseinheit (11) und die zweite Kupplungseinheit (12) mechanisch miteinander zu verbinden.

6. Verschlusskupplung (1) nach einem der vorherigen Ansprüche, **dadurch gekennzeichnet, dass** die erste Ventileinheit (112) eine Fluidleitung (1121) mit einer Aufnahme (11211) für eine Ventilkugel (1122) und einen Schieber (1124) umfasst, wobei der Schieber (1124) relativ zu der Fluidleitung (1121) entlang der Längsachse (A) verschiebbar ist.

7. Verschlusskupplung (1) nach Anspruch 6, **dadurch gekennzeichnet, dass** der Schieber (1124) eine Nabe bildet, die auf der Fluidleitung (1121), die eine Welle bildet, verschiebbar ist.

8. Verschlusskupplung (1) nach Anspruch 6 oder 7, **dadurch gekennzeichnet, dass** der Schieber (1124) derart mit der Ventilkugel (1122) zusammenwirkt, dass eine Bewegung des Schiebers (1124) relativ zu der Fluidleitung (1121) entlang der Längsachse (A) eine Rotation der Ventilkugel (1122) in der Aufnahme (11211) bewirkt.

9. Verschlusskupplung (1) nach einem der Ansprüche 6 bis 8, **dadurch gekennzeichnet, dass** die Ventilkugel (1122) eine Durchgangsöffnung (11222) aufweist und dass die Ventilkugel (1122) in der Aufnahme (11211) zwischen einer ersten Position, in der die Fluidleitung (1121) durch die Durchgangsöffnung (11222) maximal freigegeben ist, und einer zweiten Position, in der die Fluidleitung (1121) durch die Ventilkugel (1122) vollständig verschlossen ist, bewegbar ist.

10. Verschlusskupplung (1) nach einem der Ansprüche 6 bis 9, **dadurch gekennzeichnet, dass** die Aufnahme (11211) an einem Ende der Fluidleitung (1121) vorgesehen ist und dass an diesem Ende eine Ventilkappe (1123) vorgesehen ist, die die Ventilkugel (1122) in der Aufnahme (11211) hält.

11. Verschlusskupplung (1) nach Anspruch 4 oder 5 und nach einem der Ansprüche 6 bis 10, **dadurch gekennzeichnet, dass** ein Mittel (11121, 11241) zur Übertragung der Translationsbewegung der Verschlusshülse (1112) auf den Schieber (1124) vorgesehen ist, wobei das Mittel (11121, 11241) an der Verschlusshülse (1112) und/oder an dem Schieber (1124) vorgesehen ist.

12. Verschlusskupplung (1) nach Anspruch 4 oder 5 und nach einem der Ansprüche 6 bis 10 oder nach Anspruch 11, **dadurch gekennzeichnet, dass** ein Mittel (11121, 11241, 1125, 11211) zur Übertragung der Translationsbewegung der Verschlusshülse (1112) auf die Fluidleitung (1121) vorgesehen ist, wobei das Mittel an der Verschlusshülse (1112) und/oder an einem Element der Ventileinheit (112) vorgesehen ist.

13. Verschlusskupplung (1) nach einem der vorhergehenden Ansprüche, **dadurch gekennzeichnet, dass** das Betätigungselement (1114) manuell oder durch eine Antriebseinheit betätigbar ist.

14. Verschlusskupplung (1) nach einem der vorhergehenden Ansprüche, **dadurch gekennzeichnet, dass** im fluidisch gekoppelten Zustand der ersten und der zweiten Kupplungseinheit (11, 12) die erste Ventileinheit (112) an der zweiten Ventileinheit (122) anliegt.

15. Verschlusskupplung (1) nach einem der vorhergehenden Ansprüche, **dadurch gekennzeichnet, dass** im fluidisch gekoppelten Zustand der ersten und der zweiten Kupplungseinheit (11, 12) die erste Ventileinheit (112) entlang der Längsachse (A) in die zweite Kupplungseinheit (12) beziehungsweise die zweite Ventileinheit (122) entlang der Längsachse (A) in die erste Kupplungseinheit (11) hineinragt.

## Claims

1. Locking coupling (1) comprising a first coupling unit (11) and a second coupling unit (12) which extend in each case along a longitudinal axis (A),
the first coupling unit (11) comprising a first valve unit (112) and a first locking unit (111), and the second coupling unit (12) comprising a second valve unit (122) and a second locking unit (121),
the first and the second valve unit (112, 122) being configured to form a fluidic connection between the first and the second coupling unit (11, 12),
the first and the second locking unit (111, 121) being configured to connect the first coupling unit (11) and the second coupling unit (12) mechanically to one another, and
the second coupling unit (12) being of identical configuration to the first coupling unit (11), and the first coupling unit (11) comprising an actuating element (1114), by way of the actuation of which the first and the second coupling unit (11, 12) can be connected to one another mechanically via the first and the second locking unit (111, 121) and fluidically via the first and the second valve unit (112, 122),
**characterized in that**
the first locking unit (111) comprises a drive sleeve (1111) which is connected fixedly to the actuating element (1114) so as to rotate with it and a locking sleeve (1112) which is connected fixedly to the drive sleeve (1111) so as to rotate with it.

2. Locking coupling (1) according to Claim 1, **characterized in that** the first valve unit (112) is arranged within the first locking unit (111), and **in that** a part of the first valve unit (112) can be displaced along the longitudinal axis (A) relative to a part of the first locking unit (111).

3. Locking coupling (1) according to Claim 1 or 2, **characterized in that** the first locking unit (111) comprises the actuating element (1114), the actuating element (1114) being mounted such that it can be rotated about the longitudinal axis (A).

4. Locking coupling (1) according to one of the preceding claims, **characterized in that** the first locking unit (111) has a housing (1113) with a thread, **in that** the locking sleeve (1112) has a complementary thread, and **in that** the thread of the housing (1113) and the thread of the locking sleeve (1112) interact in such a way that a rotational movement of the actuating element (1114) results in a rotational movement and a translational movement of the locking sleeve (1112) along the longitudinal axis (A).

5. Locking coupling (1) according to Claim 4, **characterized in that** the locking sleeve (1112) can be moved out of the housing (1113) of the first locking unit (111) and is configured to interact with the second coupling unit (12), in particular with the second locking unit (121), in order to connect the first coupling unit (11) and the second coupling unit (12) to one another mechanically.

6. Locking coupling (1) according to one of the preceding claims, **characterized in that** the first valve unit (112) comprises a fluid line (1121), with a seat (11211) for a valve ball (1122), and a slide (1124), it being possible for the slide (1124) to be displaced along the longitudinal axis (A) relative to the fluid line (1121).

7. Locking coupling (1) according to Claim 6, **characterized in that** the slide (1124) forms a hub which can be displaced on the fluid line (1121) which forms a shaft.

8. Locking coupling (1) according to Claim 6 or 7, **characterized in that** the slide (1124) interacts with the valve ball (1122) in such a way that a movement of the slide (1124) along the longitudinal axis (A) relative to the fluid line (1121) brings about a rotation of the valve ball (1122) in the seat (11211).

9. Locking coupling (1) according to one of Claims 6 to 8, **characterized in that** the valve ball (1122) has a through opening (11222), and **in that** the valve ball (1122) can be moved in the seat (11211) between a first position, in which the fluid line (1121) is opened to a maximum extent by way of the through opening (11222), and a second position, in which the fluid line (1121) is closed completely by way of the valve ball (1122).

10. Locking coupling (1) according to one of Claims 6 to 9, **characterized in that** the seat (1121) is provided at one end of the fluid line (1121), and **in that** a valve cap (1123) which holds the valve ball (1122) in the seat (11211) is provided at the said end.

11. Locking coupling (1) according to Claim 4 or 5 and according to one of Claims 6 to 10, **characterized in that** a means (11121, 11241) for transmitting the translational movement of the locking sleeve (1112) to the slide (1124) is provided, the means (11121, 11241) being provided on the locking sleeve (1112) and/or on the slide (1124).

12. Locking coupling (1) according to Claim 4 or 5 and according to one of Claims 6 to 10 or according to Claim 11, **characterized in that** a means (11121, 11241, 1125, 11211) for transmitting the translational movement of the locking sleeve (1112) to the fluid line (1121) is provided, the means being provided on the locking sleeve (1112) and/or on an element of the valve unit (112).

13. Locking coupling (1) according to one of the preceding claims, **characterized in that** the actuating element (1114) can be actuated manually or by way of a drive unit.

14. Locking coupling (1) according to one of the preceding claims, **characterized in that** the first valve unit (112) bears against the second valve unit (122) in the fluidically coupled state of the first and the second coupling unit (11, 12).

15. Locking coupling (1) according to one of the preceding claims, **characterized in that**, in the fluidically coupled state of the first and the second coupling unit (11, 12), the first valve unit (112) protrudes along the longitudinal axis (A) into the second coupling unit (12), or the second valve unit (122) protrudes along the longitudinal axis (A) into the first coupling unit (11).

## Revendications

1. Accouplement à verrouillage (1) comportant une première unité d'accouplement (11) et une deuxième unité d'accouplement (12), qui s'étendent respectivement le long d'un axe longitudinal (A),
la première unité d'accouplement (11) comportant une première unité soupape (112) et une première unité de verrouillage (111) et la deuxième unité d'accouplement (12) comportant une deuxième unité soupape (122) et une deuxième unité de verrouillage (121),
la première et la deuxième unité soupape (112, 122) étant conçues pour former une liaison fluidique entre la première et la deuxième unité d'accouplement (11, 12),
la première et la deuxième unité de verrouillage (111, 112) étant conçues pour relier mécaniquement l'une à l'autre la première unité d'accouplement (11) et la deuxième unité d'accouplement (12), et
la deuxième unité d'accouplement (12) étant conçue de manière identique à la première unité d'accouplement (11), et la première unité d'accouplement (11) comportant un élément d'actionnement (1114), au moyen de l'actionnement duquel la première et la deuxième unité d'accouplement (11, 12) peuvent être reliées mécaniquement l'une à l'autre par le biais de la première et de la deuxième unité de verrouillage (111, 121) et peuvent être reliées fluidiquement l'une à l'autre par le biais de la première et de la deuxième unité soupape (112, 122),
**caractérisé en ce que**
la première unité de verrouillage (111) comporte une douille d'entraînement (1111), qui est reliée de manière immobilisée en rotation avec l'élément d'actionnement (1114), et une douille de verrouillage (1112), qui est reliée de manière immobilisée en rotation avec la douille d'entraînement (1111).

2. Accouplement à verrouillage (1) selon la revendication 1, **caractérisé en ce que** la première unité valve (112) est agencée à l'intérieur de la première unité de verrouillage (111) et **en ce qu'**une partie de la première unité valve (112) peut être déplacée le long de l'axe longitudinal (A) par rapport à une partie de la première unité de verrouillage (111) .

3. Accouplement à verrouillage (1) selon la revendication 1 ou 2, **caractérisé en ce que** la première unité de verrouillage (111) comprend l'élément d'actionnement (1114), l'élément d'actionnement (1114) étant monté rotatif autour de l'axe longitudinal (A).

4. Accouplement à verrouillage (1) selon l'une quelconque des revendications précédentes, **caractérisé en ce que** la première unité de verrouillage (111) comporte un boîtier (1113) muni d'un filetage, **en ce que** la douille de verrouillage (1112) comporte un filetage complémentaire, et **en ce que** le filetage du boîtier (1113) et le filetage de la douille de verrouillage (1112) coopèrent de telle sorte qu'un mouvement de rotation de l'élément d'actionnement (1114) résulte en un mouvement de rotation et un mouvement de translation de la douille de verrouillage (1112) le long de l'axe longitudinal (A).

5. Accouplement à verrouillage (1) selon la revendication 4, **caractérisé en ce que** la douille de verrouillage (1112) peut être sortie du boîtier (1113) de la première unité de verrouillage (111) et est conçue pour coopérer avec la deuxième unité d'accouplement (12), notamment avec la deuxième unité de verrouillage (121), afin de relier mécaniquement l'une à l'autre la première unité d'accouplement (11) et la deuxième unité d'accouplement (12).

6. Accouplement à verrouillage (1) selon l'une quelconque des revendications précédentes, **caractérisé en ce que** la première unité valve (112) comporte une conduite de fluide (1121) munie d'un logement (11211) pour une bille de valve (1122) et une glissière (1124), la glissière (1124) pouvant être déplacée par rapport à la conduite de fluide (1121) le long de l'axe longitudinal (A).

7. Accouplement à verrouillage (1) selon la revendication 6, **caractérisé en ce que** la glissière (1124) forme un moyeu, qui peut être déplacé sur la conduite de fluide (1121), qui forme un arbre.

8. Accouplement à verrouillage (1) selon la revendication 6 ou 7, **caractérisé en ce que** la glissière (1124) coopère avec la bille de valve (1122) de telle sorte qu'un mouvement de la glissière (1124) par rapport à la conduite de fluide (1121) le long de l'axe longitudinal (A) provoque une rotation de la bille de valve (1122) dans le logement (11211).

9. Accouplement à verrouillage (1) selon l'une quelconque des revendications 6 à 8, **caractérisé en ce que** la bille de valve (1122) comporte une ouverture de passage (11222) et **en ce que** la bille de valve (1122) est mobile dans le logement (11211) entre une première position, à laquelle la conduite de fluide (1121) est ouverte au maximum par l'ouverture de passage (11222), et une deuxième position, à laquelle la conduite de fluide (1121) est entièrement fermée par la bille de valve (1122).

10. Accouplement à verrouillage (1) selon l'une quelconque des revendications 6 à 9, **caractérisé en ce que** le logement (11211) est prévu à une extrémité de la conduite de fluide (1121) et **en ce qu'**un bouchon de valve (1123), qui maintient la bille de valve (1122) dans le logement (11211), est prévu à cette extrémité.

11. Accouplement à verrouillage (1) selon la revendication 4 ou 5 ou selon l'une quelconque des revendications 6 à 10, **caractérisé en ce qu'**un moyen (11121, 11241) pour le transfert du mouvement de translation de la douille de verrouillage (1112) à la glissière (1124) est prévu, le moyen (11121, 11241) étant prévu sur la douille de verrouillage (1112) et/ou sur la glissière (1124).

12. Accouplement à verrouillage (1) selon la revendication 4 ou 5 ou selon l'une quelconque des revendications 6 à 10 ou selon la revendication 11, **caractérisé en ce qu'**un moyen (11121, 11241, 1125, 11211) pour le transfert du mouvement de translation de la douille de verrouillage (1112) à la conduite de fluide (1121) est prévu, le moyen étant prévu sur la douille de verrouillage (1112) et/ou sur un élément de l'unité valve (112).

13. Accouplement à verrouillage (1) selon l'une quelconque des revendications précédentes, **caractérisé en ce que** l'élément d'actionnement (1114) est actionnable manuellement ou par une unité d'entraînement.

14. Accouplement à verrouillage (1) selon l'une quelconque des revendications précédentes, **caractérisé en ce qu'**à l'état accouplé fluidiquement de la première et de la deuxième unité d'accouplement (11, 12), la première unité valve (112) est adjacente à la deuxième unité valve (122).

15. Accouplement à verrouillage (1) selon l'une quelconque des revendications précédentes, **caractérisé en ce qu'**à l'état accouplé fluidiquement de la première et de la deuxième unité d'accouplement (11, 12), la première unité valve (112) avance le long de l'axe longitudinal (A) dans la deuxième unité d'accouplement (12) ou la deuxième unité valve (122) avance le long de l'axe longitudinal (A) dans la première unité d'accouplement (11).
